Europäisches Patentamt

European Patent Office

Office européen des brevets

(19)

(11)  **EP 1 183 772 B1**

(12)  **EUROPÄISCHE PATENTSCHRIFT**

(45) Veröffentlichungstag und Bekanntmachung des Hinweises auf die Patenterteilung:
    **25.10.2006  Patentblatt 2006/43**

(21) Anmeldenummer: **00935099.2**

(22) Anmeldetag: **23.05.2000**

(51) Int Cl.:
    ***H02P 6/00*** (2006.01)

(86) Internationale Anmeldenummer:
    **PCT/EP2000/004683**

(87) Internationale Veröffentlichungsnummer:
    **WO 2000/074226 (07.12.2000 Gazette 2000/49)**

(54) **VERFAHREN ZUR KONFIGURATION DER ALARMVORRICHTUNG EINES ELEKTROMOTORS, UND MOTOR ZUR DURCHFÜHRUNG EINES SOLCHEN VERFAHRENS**

METHOD FOR CONFIGURING THE ALARM DEVICE OF AN ELECTRICAL MOTOR AND MOTOR FOR IMPLEMENTING SAID METHOD

PROCEDE POUR CONFIGURER UN DISPOSITIF D'ALARME D'UN MOTEUR ELECTRIQUE, ET MOTEUR POUR METTRE EN OEUVRE LEDIT PROCEDE

(84) Benannte Vertragsstaaten:
    **AT BE CH CY DE DK ES FI FR GB GR IE IT LI LU MC NL PT SE**

(30) Priorität: **29.05.1999  DE 19924821**

(43) Veröffentlichungstag der Anmeldung:
    **06.03.2002  Patentblatt 2002/10**

(73) Patentinhaber: **ebm-papst St. Georgen GmbH & Co. KG**
    **78112 St. Georgen (DE)**

(72) Erfinder:
  • **HORNBERGER, Jörg**
    **D-72280 Dornstetten (DE)**
  • **JESKE, Frank**
    **D-78112 St. Georgen (DE)**
  • **RAPPENECKER, Hermann**
    **D-78147 Vöhrenbach (DE)**
  • **KALTENBRUNNER, Hansjörg**
    **D-78199 Bräunlingen (DE)**
  • **KARWATH, Arno**
    **D-78652 Deißlingen (DE)**

(56) Entgegenhaltungen:
    **DE-A- 4 441 372          US-A- 5 767 649**

  • **PATENT ABSTRACTS OF JAPAN vol. 1995, no. 10, 30. November 1995 (1995-11-30) & JP 07 177776 A (MATSUSHITA ELECTRIC IND CO LTD), 14. Juli 1995 (1995-07-14)**
  • **PATENT ABSTRACTS OF JAPAN vol. 1999, no. 04, 30. April 1999 (1999-04-30) & JP 11 027949 A (MATSUSHITA ELECTRIC IND CO LTD), 29. Januar 1999 (1999-01-29)**

**Beschreibung**

Die Erfindung betrifft ein Verfahren zur Konfiguration der Alarmvorrichtung eines Elektromotors, und einen Motor zur Durchführung eines solchen Verfahrens.

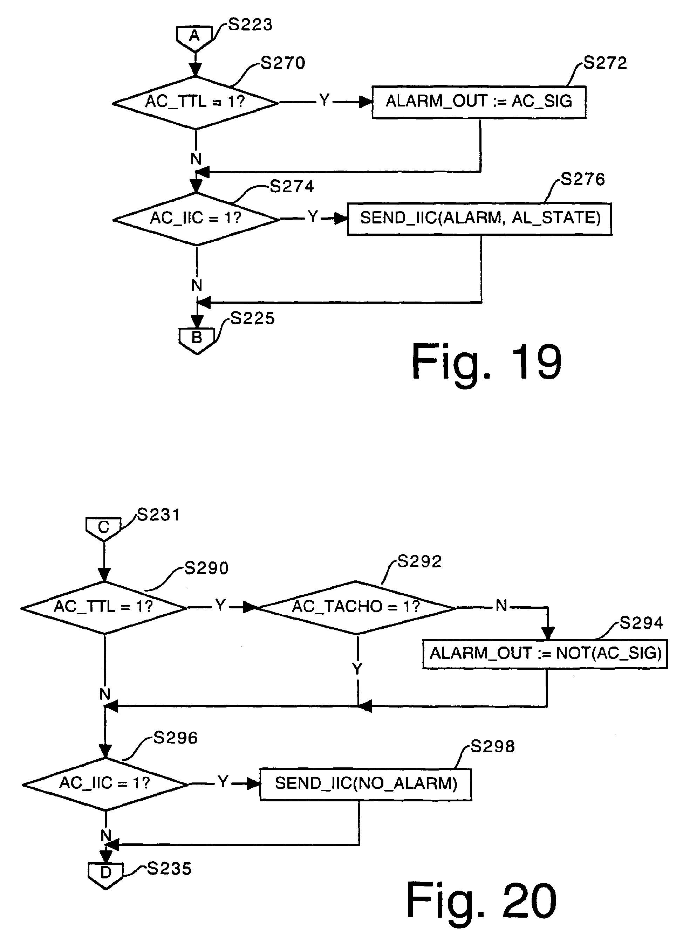

Aus der EP 0 895 345 A1 (EP183B = EP-3008B) ist ein Elektromotor mit einer Alarmvorrichtung bekannt, vgl. dort Fig. 20. Diese Alarmvorrichtung ist wenig flexibel. Verlangt ein Kunde Änderungen, werden oft umfangreiche Änderungen an der Hardware des Motors erforderlich, um diese erfüllen zu können.

Es ist eine Aufgabe der Erfindung, ein Verfahren zur Konfiguration der Alarmvorrichtung eines Elektromotors, und einen Motor zur Durchführung eines solchen Verfahrens, bereitzustellen.

Nach der Erfindung wird diese Aufgabe gelöst durch ein Verfahren zur Konfiguration einer Alarmvorrichtung eines Elektromotors, dem ein Mikrocontroller oder Mikroprozessor, im folgenden Mikroprozessor genannt, eine Eingabe-Schnittstelle und ein Parameterspeicher zugeordnet sind, welches Verfahren folgende Schritte aufweist: Über die Eingabe-Schnittstelle wird mindestens ein Parameter für die Konfiguration der Alarmvorrichtung des Motors eingegeben; der mindestens eine Parameter wird in dem Parameterspeicher gespeichert; der Ablauf mindestens einer in dem Mikroprozessor vorgesehenen Routine der Alarmvorrichtung wird von diesem gespeicherten Parameter, oder einem von ihm abgeleiteten Parameter, beeinflusst.

Ein derartiger Motor ermöglicht eine Konfigurierung der Alarmvorrichtung mittels unterschiedlicher Parameter, also softwaremäßig, so dass bei geänderten Kundenwünschen nicht die Produktion umgestellt werden muss. Der Kunde kann sogar die Möglichkeit erhalten, die Alarmvorrichtung selbst zu konfigurieren. Insbesondere wird hierdurch eine denkbare Vielfalt von in dem Mikroprozessor verwendeten Programme auf ein einziges Programm für alle bei diesem Motor möglichen Konfigurationen reduziert, was in erheblichem Umfang Zeit und Kosten einspart. Auch eine eventuell zuvor vorhandene Hardwarekonfiguration, z.B. durch DIP-Switches, kann entfallen. Durch die Einsparung der Zeit für eine neue Programmierung und für Hardwareänderungen ist es möglich, schneller auf die Wünsche der Kunden zu reagieren und Kleinserien mit besonderen Kundenwünschen zu verwirklichen, die sich zuvor nicht gelohnt hätten.

Nach einer bevorzugten Weiterbildung der Erfindung für einen Motor, dessen Mikroprozessor ein nichtflüchtiger Speicher zugeordnet ist, wird der mindestens eine Parameter für die Konfiguration der Alarmvorrichtung in diesem nichtflüchtigen Speicher abgespeichert. Ein derartiger Motor ermöglicht eine Konfiguration der Alarmvorrichtung vor der Auslieferung an den Kunden, aber nach der Fertigstellung des Motors. Auch ist es dem Hersteller des Motors möglich, die Konfiguration der Alarmvorrichtung zu einem späten Zeitpunkt durchzuführen, z.B. im Auslieferungslager, dem Kunden jedoch keine Möglichkeit zur Veränderung der Alarmvorrichtung zu bieten.

Nach einer weiteren bevorzugten Weiterbildung dieser Erfindung sind mehrere Alternativen für die Ausgabe des Signals der Alarmvorrichtung vorgesehen, und die gewünschte Alternative wird dadurch festgelegt, dass mindestens ein entsprechender Parameter über die Eingabe-Schnittstelle im Parameterspeicher gespeichert wird. Diese Möglichkeit einer Auswahl der Ausgabe des Signals der Alarmvorrichtung ermöglicht eine weitere Reduzierung der herzustellenden Motortypen. Verlangt z.B. ein Kunde eine Ausgabe-Schnittstelle A und ein anderer Kunde eine Schnittstelle B, so können beide Schnittstellen A und B zur Ausgabe von Signalen an dem Motor angebracht werden, und durch eine entsprechende Konfiguration, also Eingabe eines entsprechenden Parameters, kann die Ausgabe auf Schnittstelle A oder B konfiguriert werden.

Eine andere Lösung der gestellten Aufgabe ergibt sich durch ein Verfahren zum Betreiben eines elektronisch kommutierten Motors, welchem ein Mikroprozessor oder Mikrocontroller, nachfolgend kurz Mikroprozessor genannt, und ein nichtflüchtiger Speicher, zugeordnet sind, wobei der Mikroprozessor zur Ausführung einer Mehrzahl von Routinen unterschiedlicher Priorität dient, mit folgenden Schritten: a) Wenn bei der Ausführung einer zur Fehlererkennung dienenden Diagnoseroutine ein Fehler festgestellt wird, wird ein diesem Fehler zugeordnetes Signal gesetzt; b) durch eine zur Auslösung eines Alarms dienende Alarmüberwachungsroutine wird in zeitlichen Abständen geprüft, ob ein einem Fehler zugeordnetes Signal gesetzt ist; c) bei gesetztem Signal wird entsprechend diesem Signal und mindestens einem Parameter, welcher in dem nichtflüchtigen Speicher gespeichert oder von diesem abgeleitet ist, ein Alarmsignal erzeugt. Durch den mindestens einen Parameter, welcher im nichtflüchtigen Speicher gespeichert ist, wird eine Anpassung des Vorgangs der Alarmauslösung an die individuellen Bedürfnisse der Kunden sehr erleichtert.

Eine andere Lösung der gestellten Aufgabe ergibt sich durch einen Elektromotor zur Durchführung eines Verfahrens nach einem oder mehreren der vorhergehenden Ansprüche.

Dabei wird einem solchen Elektromotor bevorzugt ein Mikrocontroller oder Mikroprozessor, im folgenden kurz Mikroprozessor genannt, zugeordnet, ferner mindestens eine Diagnoseroutine zur Erfassung eines im Betrieb des Motors auftretenden Fehlers, und mindestens eine Alarmüberwachungsroutine zur Auslösung eines Alarms, nachdem eine Diagnoseroutine einen Fehler erfasst hat, wobei diese Routinen einen Bestandteil des Programms des Mikroprozessors bilden. Es ergibt sich so eine einfache und übersichtliche Programmstruktur, die sehr gut an die Bedürfnisse eines Motors angepasst ist.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden

**EP 1 183 772 B1**

Ausführungsbeispielen, sowie aus den Unteransprüchen. Es zeigt:

Fig. 1 ein Übersichtsschaltbild einer bevorzugten Ausführungsform eines erfindungsgemäßen elektronisch kommutierten Motors,

Fig. 2A bis 2C schematische Diagramme der in dem Dreiecksgenerator 100 der Fig. 1 auftretenden Spannungen und Signale,

Fig. 3 ein schematisches Diagramm des von dem Rotorstellungssensor 132 detektierten und an den μC 23 der Fig. 1 übergebenen Signals HALL,

Fig. 4 ein Übersichtsflussdiagramm der in dem μC 23 der Fig. 3 ablaufenden Alarmfunktionen 86 der Fig. 1,

Fig. 5 ein Hauptprogramm in der Ausführung eines Funktionsmanagers, wie er bevorzugt bei einem erfindungsgemäßen Motor verwendet wird,

Fig. 6 eine Darstellung eines Steuerworts mit acht Bit, welche dazu dienen, in dem Funktionsmanager (Fig. 5) die Ausführung von Funktionen anzufordern, bzw. diese Anforderungen zurückzusetzen,

Fig. 7A eine Tabelle mit Objekten, weiche Parameter enthalten, mit denen im Motor 32 der Fig. 1 die Alarmvorrichtung konfiguriert werden kann,

Fig. 7B eine Tabelle mit den Objekteigenschaften des Objekts AL_CONF der Fig. 7A, welche das Verhalten der Alarmfunktion bestimmen,

Fig. 8 eine Darstellung des Steuerworts AL_CTRL, welches für die Steuerung der Alarmfunktionen nach Fig. 1 verwendet wird,

Fig. 9 eine Darstellung des Statusworts AL_STATE, welches für die Speicherung und Änderung der Zustände der Alarmfunktionen nach Fig. 1 verwendet wird,

Fig. 10 ein Flussdiagramm der Funktion (Routine) "TACHO" der Fig. 5,

Fig. 11 ein Flussdiagramm der Routine A/D, welche dazu dient, einen analogen Wert der Temperatur T in einen digitalen Wert umzuwandeln, diesen umgewandelten Wert auf Plausibilität zu prüfen, und beim Vorkommen nicht plausibler Werte einen Fehler zu diagnostizieren,

Fig. 12 ein Flussdiagramm der Funktion "Alarm-Drehzahl-Kontrolle" der Fig. 5, welches prüft, ob sich die Drehzahl des Motors in einem vorgegebenen Drehzahlbereich befindet und bei Verlassen dieses Bereichs einen Fehler diagnostiziert,

Fig. 13 ein Flussdiagramm der Funktion "Alarm-Temperatur-Kontrolle" der Fig. 5, welches dazu dient, das Einhalten einer vorgegebenen Temperaturgrenze zu überwachen und bei Nicht-Einhalten einen Fehler zu diagnostizieren,

Fig. 14 ein Flussdiagramm der Funktion "Alarm-Kontrolle" der Fig. 5, welches dazu dient, nach dem Diagnostizieren eines Fehlers ein Alarmsignal zu erzeugen, sofern bestimmte Randbedingungen erfüllt sind,

Fig. 15 ein Flussdiagramm des Teils "ALARM_RESET" der Fig. 14,

Fig. 16 ein Flussdiagramm des Teils "DEL_START_CHK" der Fig. 14,

Fig. 17 ein Flussdiagramm des Teils "DEL_CHK" der Fig. 14,

Fig. 18A bis 18C Diagramme eines beispielhaften Verlaufs von Betriebsspannung $U_B$, Drehzahl des Motors 32 und Alarmsignal ALARM_OUT bei einem erfindungsgemäßen Motor 32,

Fig. 19 ein Flussdiagramm zur parametergesteuerten Ausgabe des Alarmsignals auf unterschiedliche Alarmausgänge,

Fig. 20 ein Flussdiagramm zum Zurücksetzen der gemäß Fig. 19 aktivierten Alarmausgänge, und

Fig. 21 ein Flussdiagramm des in Fig. 5 angedeuteten Hall-Interrupts 611, welcher unter anderem dazu dient, die Kommutierung des Motors 32 zu steuern oder zu beeinflussen.

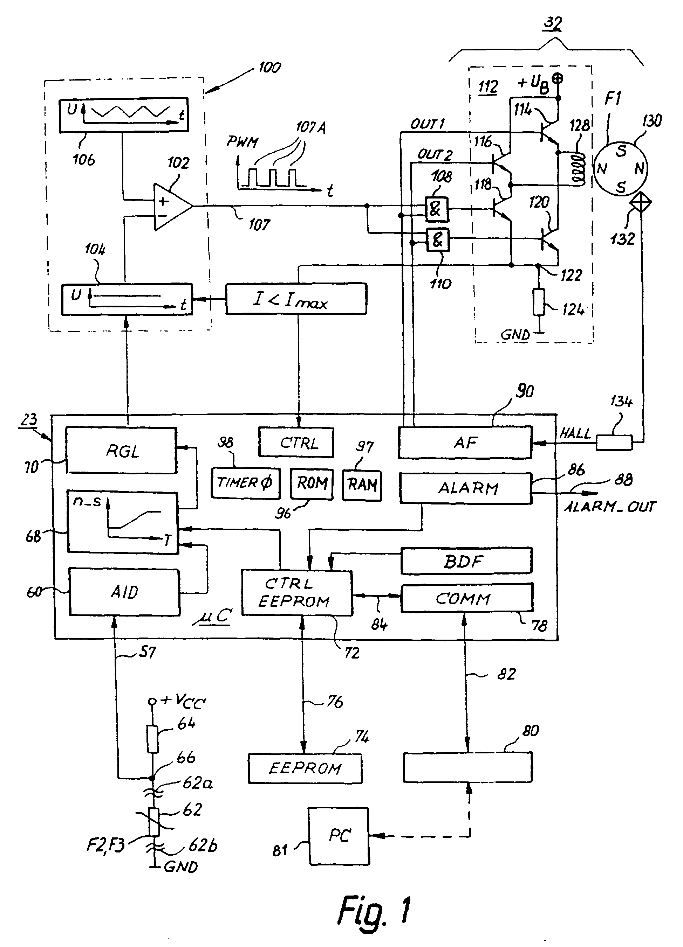

**Übersicht Motor (Fig. 1)**

**Fig. 1** zeigt eine Übersicht über ein bevorzugtes Ausführungsbeispiel eines erfindungsgemäßen elektronisch kommutierten Motors (ECM). Dieser wird gesteuert mittels eines Mikrocontrollers ($\mu$C) 23, oder alternativ eines Mikroprozessors. Der $\mu$C 23 weist einen A/D-Wandler 60, eine Kennlinienfunktion 68, eine Funktion "RGL" (Reglerfunktion) 70, eine Funktion "CTRL EEPROM" 72, eine Funktion "COMM" (Kommunikationsfunktion) 78, eine Funktion "ALARM" (Alarmfunktion) 86 und eine Funktion "AF" (Antriebsfunktion) 90 auf. Der A/D-Wandler 23 kann auch außerhalb des $\mu$C 23 angeordnet sein.

Ein NTC-Widerstand 62 ist zwischen einem Punkt 66 und Masse (GND) geschaltet und ein Widerstand 64 zwischen einer Spannung Vcc (z.B. + 5 V) und dem Punkt 66. Der Punkt 66 ist mit dem A/D-Wandler 60 verbunden.

Ein EEPROM 74 ist über einen Bus 76 mit der Funktion "CTRL EEPROM" 72 verbunden. Anstatt des EEPROMs 74 könnte ebenfalls z.B. ein Flash-ROM, eine nachprogrammierbare Flex-ROM-Zelle oder ein anderer nichtflüchtiger Speicher verwendet werden. Das EEPROM 74, oder ein anderer nichtflüchtiger Speicher, kann in den $\mu$C 23 integriert sein.

Der $\mu$C 23 hat ferner ein ROM 96, ein RAM 97, und einen Timer 98, der auch als TIMERØ bezeichnet wird. Das ROM 96 wird gewöhnlich zusammen mit der Herstellung des $\mu$C 23 programmiert. Es kann auch außerhalb des $\mu$C 23 angeordnet sein, ebenso das RAM 97 und der Timer 98, wie dem Fachmann bekannt.

Ein Busanschluss 80 ist über eine Leitung 82 mit der Funktion "COMM" 78 verbunden.

Die Funktion "ALARM" 86 kann ein Signal am Ausgang ALARM_OUT 88 ausgeben.

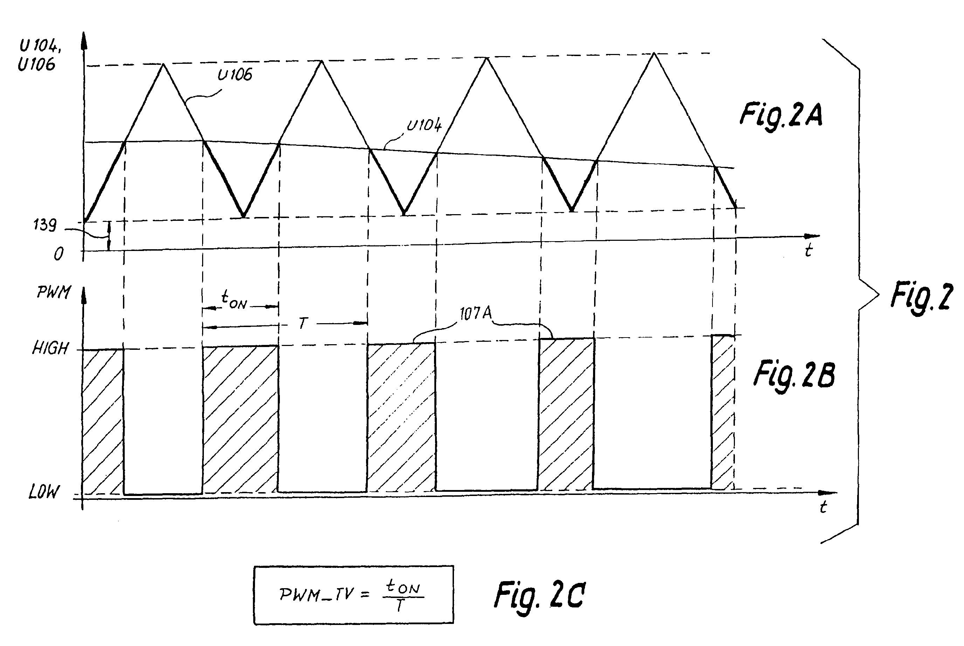

Die Funktion "RGL" 70 ist mit einem Pulsweitenmodulationsgenerator (PWM-Generator) 100 verbunden. Der PWM-Generator weist eine Regelspannungserzeugung 104, einen Dreiecksgenerator 106 und einen Komparator 102 auf, und wird bei Fig. 2 näher beschrieben. Über den Ausgang 107 des PWM-Generators 100 gelangt ein Signal PWM zu zwei logischen UND-Gliedern 108, 110.

Als einfaches Beispiel ist in Fig. 1 ein elektronisch kommutierter Motor 32 mit einer einzigen Phase 128 dargestellt. Das Prinzip eines solchen Motors ist z.B. in der DE 2 346 380 C erläutert. Der Motor 32 weist einen Rotor 130, einen Hallsensor 132 und eine Transistorendstufe 112 auf.

Die Transistorendstufe 112 weist vier als H-Brücke geschaltete npn-Transistoren 114, 116, 118, 120 und einen Widerstand 124 für die Strommessung auf. Die Transistorendstufe könnte jedoch ebenfalls z.B. zweisträngig ausgebildet sein.

Das Signal des Hallsensors 132 gelangt über eine elektronische Hallschaltung 134 zu der Funktion "AF" 90.

Die Funktion "AF" 90 steuert zwei Ausgänge OUT1, OUT2, welche mit den oberen npn-Transistoren 114, 116 und mit den UND-Gliedern 108, 110 verbunden sind.

**Arbeitsweise**

Die Bestromung der Phase 128 geschieht durch die Transistorendstufe 112. Die Ausgänge OUT1, OUT2 steuern die als H-Brücke 112 geschalteten Transistoren 114, 116, 118, 120. Ist OUT1 auf HIGH und OUT2 auf LOW, so sind die Transistoren 114 und 118 leitend, und ein Strom fließt von der Betriebsspannung +UB über den Transistor 114, die Statorwicklung 128, den Transistor 118 und den Widerstand 124 nach Masse GND. Es wird bei dieser Betrachtung davon ausgegangen, dass das Signal PWM (Leitung 107) ständig auf HIGH ist, da ansonsten die UND-Glieder 108, 110 und damit die Transistoren 118, 120 sperren.

Ist OUT1 auf LOW und OUT2 auf HIGH, so fließt ein Strom von +UB über den Transistor 116, in umgekehrter Richtung durch die Statorwicklung 128, über den Transistor 120 und den Widerstand 124 nach Masse GND.

Der von der Statorwicklung 128 erzeugte alternierende magnetische Fluss bewirkt ein Drehmoment auf den permanentmagnetischen Rotor 130 und treibt diesen an. Der Rotor 130 ist in diesem Ausführungsbeispiel vierpolig dargestellt.

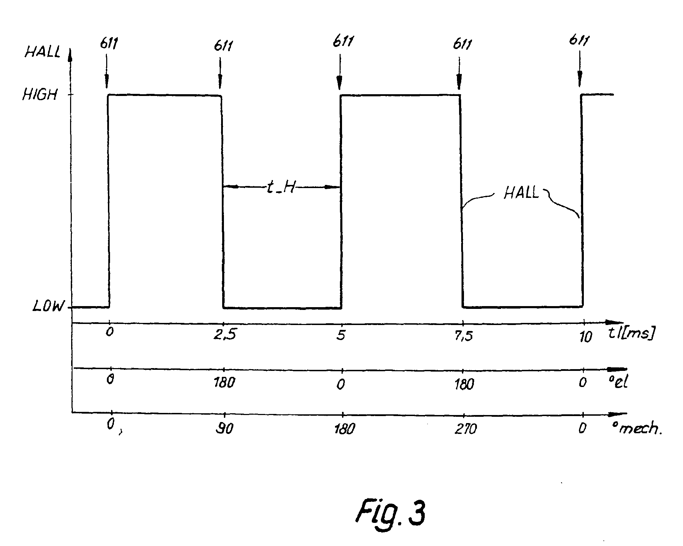

Die Stellung des Rotors 130 wird über den Hallsensor 132 erfasst. Sein Signal wird in der Schaltung 134 durch einen Tiefpass gefiltert und zu einem rechteckförmigen digitalen Signal HALL (Fig. 3) verarbeitet, welches der Funktion "AF" 90 zugeführt wird.

Die Funktion "AF" 90 steuert, ausgehend von dem Signal HALL, die Ausgänge OUT1, OUT2. Die Kommutierung des Motors 32 erfolgt bei diesem Beispiel elektronisch in bekannter Weise, vgl. z.B. EP 0 567 989 B1. Die Funktion "AF" 90 sorgt über die richtige Kommutierung hinaus für einen sicheren Betrieb des Motors 32, z.B. bei einer Überlastung der Transistorendstufe 112. - Eine Ausführung der Kommutierung ist auch in der Weise möglich, dass mit steigender Drehzahl die Transistoren 114 bis 120 früher kommutiert werden, etwa analog der Frühzündung bei einem Benzinmotor.

Selbstverständlich eignet sich die Erfindung in gleicher Weise für jede Art von Motor, z.B. für zweiphasige oder dreiphasige ECMs und andere. Es handelt sich also nur um ein einfaches Ausführungsbeispiel, um das Verständnis der Erfindung zu erleichtern.

Eine Drehzahlregelung wird bei diesem Ausführungsbeispiel durch eine Regelung des Tastverhältnisses PWM_TV des Signals PWM am Ausgang 107 des Reglers 100 erreicht, d.h. dadurch, dass die Impulse 107A (Fig. 2) länger oder kürzer gemacht werden. Zur Definition des Tastverhältnisses PWM_TV siehe Fig. 2C. Je größer dieses Tastverhältnis ist, desto länger werden die Impulse 107A, und desto länger wird der Ausgang des momentan durch OUT1 oder OUT2 angesteuerten UND-Glieds 108 oder 110 auf HIGH geschaltet. Die Statorwicklung 128 wird folglich länger bestromt, und der Motor 32 stärker angetrieben. Ist z.B. OUT1 auf HIGH und OUT2 auf LOW, so ist der obere Transistor 114 leitend geschaltet, und der untere Transistor 118 wird entsprechend dem Signal PWM über das UND-Glied 108 ein- und ausgeschaltet.

Die Funktion "RGL" 70 regelt in diesem Ausführungsbeispiel über den PWM-Generator 100 die Drehzahl n des Motors 32. Der Funktion "RGL" 70 stehen hierzu die Drehzahl n des Rotors 130, welche über das Signal HALL berechnet wird (siehe Beschreibung zu Fig. 3), und die Solldrehzahl n_s, welche in diesem Ausführungsbeispiel durch die Kennlinienfunktion 68 bestimmt wird, zur Verfügung. Die Drehzahlen n und n_s können hierbei z.B. in Form von Hallzeiten t_H (Fig. 3), z.B. in der Einheit [$\mu$s] oder [s], oder als Drehzahl, z.B. in der Einheit [U/min], vorliegen.

Die Kennlinienfunktion 68 ordnet bei diesem Beispiel jeder Temperatur T (erfasst vom NTC-Widerstand 62 der Fig. 1) eine Solldrehzahl n_s(T) zu. Das Potential am Punkt 66 (Fig. 1), welches ein Maß für die Temperatur des Widerstands 62 darstellt, wird durch den A/D-Wandler 60, welcher sich im $\mu$C 23 befindet, digitalisiert und der Kennlinienfunktion 68 zugeführt.

Die Kennlinienfunktion 68 bestimmt aus der Temperatur T die Solldrehzahl n_s des Motors 32. Hierzu wird z.B. über eine Funktion "CTRL EEPROM" 72 der zu der Temperatur T zugehörige Wert n_s (T) aus einer Temperatur-Solldrehzahl-Tabelle im EEPROM 74 geladen. Für eine andere bevorzugte Variante, bei der nur Eckpunkte einer Kennlinie gespeichert sind und zwischen diesen Eckpunkten interpoliert wird, wird auf die deutsche Patentanmeldung 198 36 882.8 (intern: D216) verwiesen, um unnötige Längen zu vermeiden.

Die Funktion "COMM" 78 verwaltet den Busanschluss 80, über den Daten von außerhalb in den $\mu$C 23 übermittelt werden können, und über den umgekehrt Daten aus dem $\mu$C 23 nach außen übermittelt werden können. Es können z.B. Daten, welche über den Busanschluss 80 mit Hilfe der Funktion "COMM" 78 in den $\mu$C 23 gelangen, über die Verbindung 84 und mit Hilfe der Funktion "CTRL EEPROM" 72 in das EEPROM 74 geschrieben werden.

Da nachfolgend auf die Regelung der Motordrehzahl Bezug genommen wird, wie sie bei manchen Ausführungsformen der Erfindung verwendet wird, wird beispielhaft ein Drehzahlregler kurz beschrieben. Für den Fachmann ist selbstverständlich, dass es eine Vielzahl von Drehzahlreglern gibt, die im Rahmen der Erfindung verwendet werden können, und dass dies deshalb nur ein Beispiel ist, welches das Verständnis der Erfindung erleichtern soll. Die Erfindung ist in keiner Weise auf diese Art der Drehzahlregelung beschränkt. Diese stellt vielmehr ein bevorzugtes Ausführungsbeispiel dar.

**PWM-Generator**

**Fig. 2A** zeigt ein Dreieckssignal u106 des Dreiecksgenerators 106 und einen Stellwert u104, welcher an der Regelspannungserzeugung 104 vorliegt, **Fig. 2B** das aus Fig. 2A resultierende Signal PWM, und **Fig. 2C** die Berechnung des Tastverhältnisses PWM_TV.

Das Dreieckssignal u106 aus dem Dreiecksgenerator 106 ist idealisiert dargestellt. In Wirklichkeit hat es keine perfekte Dreiecksform, was jedoch an der Funktionsweise des PWM-Generators 100 aus Fig. 1 nichts ändert. Das Dreieckssignal U106 hat einen Offset 139 von der Spannung 0 V. Der Stellwert u104 bewirkt also erst ein Tastverhältnis PWM_TV größer Null, wenn er über dem Offset 139 liegt.

Das Tastverhältnis PWM_TV des Signals PWM ist das Verhältnis der Dauer $t_{ON}$, die das Signals PWM während einer Periode des Dreieckssignals U106 auf HIGH ist, zu einer ganzen Periode T des Dreieckssignals U106, vgl. Fig. 2B. Es gilt

$$PWM\_TV = t_{ON}/T \qquad\qquad ... (1)$$

Das Tastverhältnis PWM_TV kann zwischen 0 % und 100 % liegen. Ist die Motordrehzahl z.B. zu hoch, so wird der Stellwert u104 erniedrigt und damit das Tastverhältnis PWM_TV verkleinert, wie das in Fig. 2A im zeitlichen Verlauf dargestellt ist. Man bezeichnet das als Pulsweitenmodulation (PWM).

**Fig. 3** zeigt das Signal HALL, welches der von dem Hallsensor 132 (Fig. 1) detektierten Stellung des Rotors 130 entspricht, und dem µC 23 über die elektronische Hallschaltung 134 (Fig. 1) zugeführt wird.

Der Rotor 130 kann zum Beispiel eine Drehzahl n = 6000 U/min haben. Eine mechanische Umdrehung des Rotors 130 dauert dann 10 ms. Der Rotor 130 ist in diesem Ausführungsbeispiel vierpolig ausgebildet, so dass in einer mechanischen Umdrehung (360 °mech.) vier Hallwechsel stattfinden, zwei von HIGH nach LOW und zwei von LOW nach HIGH. Eine elektrische Umdrehung (360 °el.) ist dagegen schon nach zwei Hallwechseln durchgeführt, es finden also bei einem vierpoligen Motor bei einer mechanischen Umdrehung zwei elektrische Umdrehungen statt.

Die Drehzahl n wird aus der Hallzeit t_H (Fig. 3) zwischen zwei Hallwechseln berechnet. Es gilt

$$t\_H = T/P \qquad\qquad ...(2)$$

$$\text{Es gilt ferner } T = (60 \text{ Sekunden})/n \qquad\qquad ...(3)$$

Aus (2) und (3) folgt

$$t\_H = ((60 \text{ Sekunden})/n)/P \qquad\qquad ...(4)$$

Hierbei ist

T = zeitliche Dauer einer mechanischen Umdrehung des Rotors 130, in Sekunden

P = Polzahl des Rotors (hier P = 4)

n = Drehzahl in U/min.

Bei n = 6000 U/min und P = 4 erhält man aus (4)

t_H=60s/6000/4=2,5ms.

Bei einer Drehzahl von 6000 U/min beträgt also der zeitliche Abstand t_H zwischen zwei Wechseln des Signals HALL 2,5 ms, wie in Fig. 3 beispielhaft dargestellt.

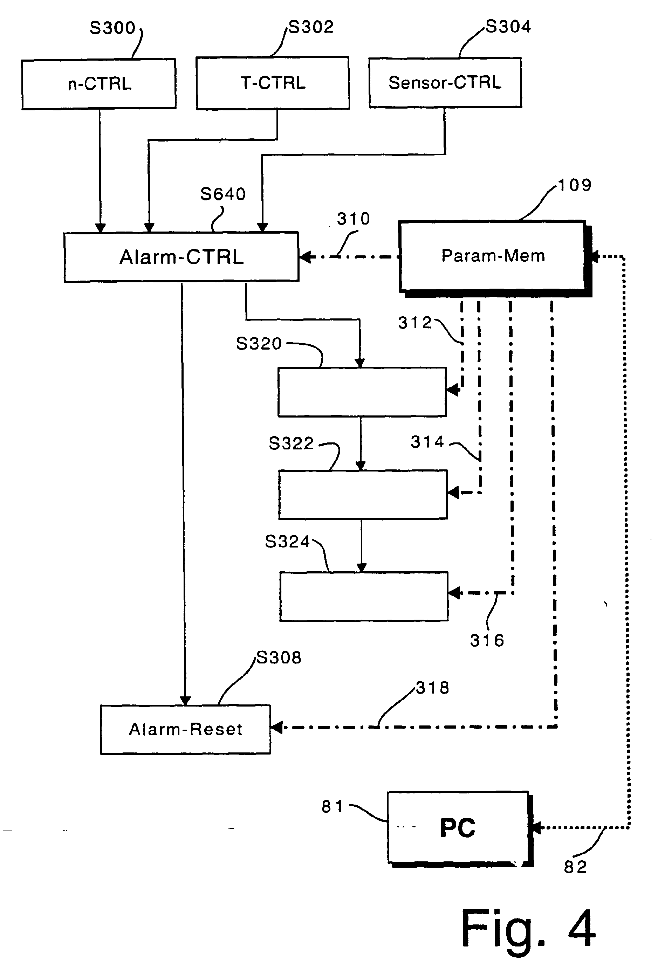

**Fig. 4** zeigt eine Übersicht über den Aufbau der Alarmfunktionen 86 (Fig. 1).

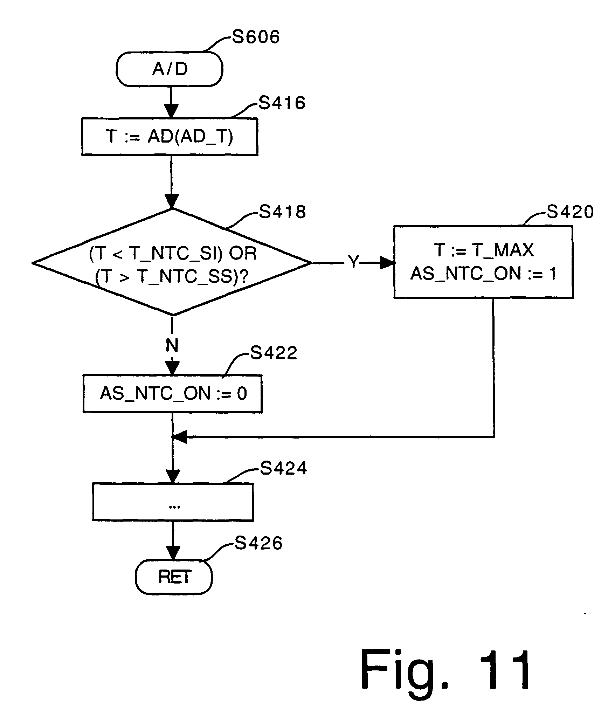

Die Drehzahl n des Motors 32 wird durch die Drehzahlüberwachung (n-CTRL) S300 überwacht, die Temperatur T (am NTC-Widerstand 62) durch eine Temperatur-Überwachung (T-CTRL) S302 und die Funktionstüchtigkeit des NTC-Widerstands 62 (Fig. 1) durch eine Sensor-Überwachung (Sensor-CTRL) S304, vgl. Fig. 11.

Falls bei einer der Funktionen S300, S302, S304 ein Alarmzustand des Motors 32 auftritt, fordert diese bei einer Funktion "Alarm-Kontrolle" (Alarm-CTRL) S640 (Fig. 4, 5, 14) einen Alarm an. Ist der Alarmzustand des Motors 32 beendet, so setzt die entsprechende Funktion S300, S302 bzw. S304 den Alarmzustand wieder zurück.

Falls ein Alarm angefordert ist, wird zuerst bei S320 eine Funktion "Hochlaufverzögerung" (startup delay) durchgeführt, die bewirkt, dass erst ein Alarm ausgelöst werden kann, wenn der Motor 32 bereits eine bestimmte Zeit gelaufen ist, d.h. wenn er nach dem Einschalten seine Betriebsdrehzahl erreicht hat.

Daraufhin wird in S322 eine Funktion "Alarmverzögerung" ausgeführt, welche ein Verzögerung zwischen der Anforderung des Alarms von einer der Funktionen S300, S302, S304 und dem Auslösen dieses Alarms einführt. Damit wird erreicht, dass kurze Alarmanforderungen nicht zu einem Alarm führen. Dies vermeidet unnötige Alarme.

In der Alarm-Ausgabe S324 wird dann schließlich, falls die Alarmanforderung auch nach der Alarmverzögerung (S322) noch vorhanden ist, ein Alarmsignal ausgegeben.

Sind alle Alarmanforderungen gelöscht, so wird von der Funktion "Alarm-Kontrolle" S640 zu der Funktion "Alarm-Reset" S308 (Fig. 4) gesprungen. Dort wird die Ausgabe des Alarmsignals beendet.

Mit dieser Struktur wird erreicht, dass die einzelnen Überwachungsroutinen S300, S302, S304 klein bleiben und damit wenig Speicherplatz und Rechenzeit benötigen, da sie nur eine Anforderung an die Funktion "Alarm-Kontrolle" S640 weitergeben, und die Funktion S640 "Alarm-Kontrolle" ermöglicht eine einheitliche Behandlung der Alarmanforderungen an einer zentralen Stelle und mit niedriger Priorität. Die Funktionen "Hochlaufverzögerung" S320 und "Alarmverzögerung" S322 vermeiden unnötige Fehlalarme.

Wie Fig. 4 schematisch zeigt, können die verschiedenen Routinen durch Parameter beeinflusst werden, die in einem Parameterspeicher (Param-Mem) 109 beliebiger Art gespeichert sind und die über die Datenleitung 82 aus einem PC 81 zugeführt werden können.

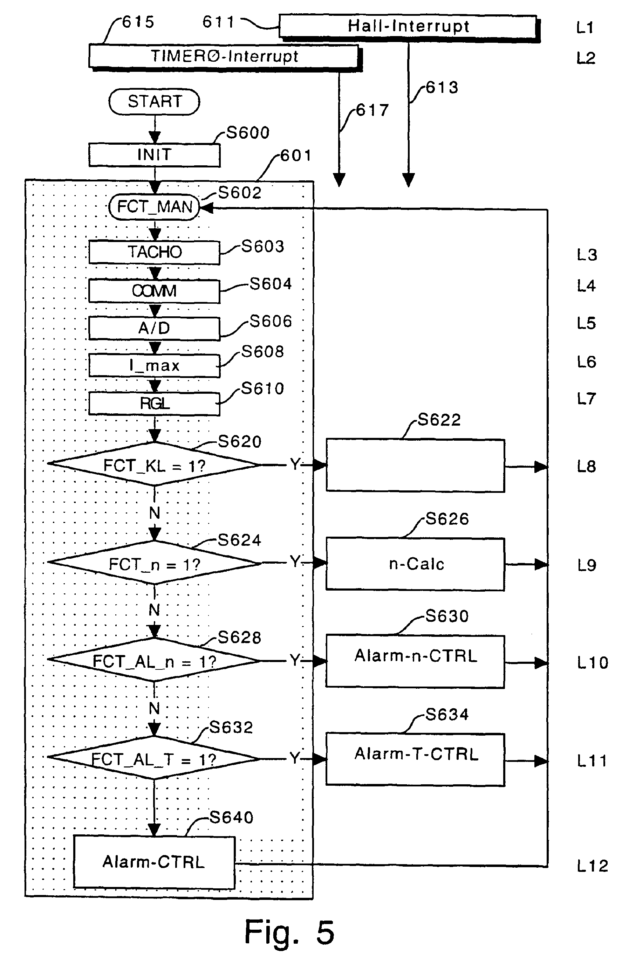

Einige dieser Parameter können im ROM 96 des µC 23 bereits bei dessen Herstellung gespeichert worden sein, um eine Art Grundkonfiguration des Motors zu erhalten. Bestimmte Parameter können im EEPROM 74 gespeichert sein, wenn der Motor 32 abgeschaltet ist. Bei der Initialisierung (S600 in Fig. 5) werden die Parameter gewöhnlich aus dem EEPROM 74 in das RAM 97 des μC 23 geladen, um im Betrieb des Motors 32 einen schnellen Zugriff auf diese Parameter zu ermöglichen.

Mit 310 ist eine Wirkverbindung bezeichnet, mit der die Parameter im Speicher 109 den Ablauf der Alarmkontrolle S640 beeinflussen.

Mit 312 ist eine Wirkverbindung bezeichnet, mit der die Parameter im Speicher 109 den Ablauf der Hochlaufverzögerung S320 beeinflussen.

Mit 314 ist eine Wirkverbindung bezeichnet, mit der die Parameter im Speicher 109 den Ablauf der Alarmverzögerung S322 beeinflussen.

Mit 316 ist eine Wirkverbindung bezeichnet, mit der Parameter im Speicher 109 den Ablauf der Alarm-Ausgabe S324 beeinflussen.

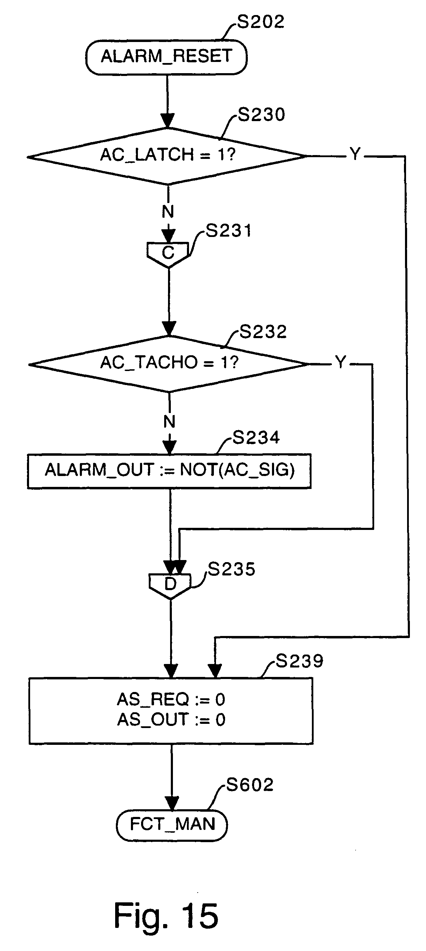

Mit 318 ist eine Wirkverbindung bezeichnet, mit der die Parameter im Speicher 109 den Ablauf des Alarm-Resets S308 beeinflussen, der in Fig. 15 im einzelnen dargestellt ist.

Da das Programm bevorzugt in handliche, kurze Routinen unterteilt ist, können diese leicht durch entsprechende Parameter in ihrem Ablauf verändert werden, d.h. die Programmstruktur bleibt unverändert, und es werden im wesentlichen nur Daten verändert, die den Programmablauf beeinflussen, z.B. die Dauer der Hochlaufverzögerung, die Dauer der Alarmverzögerung, die Art der Alarmausgabe, und die Art des Alarm-Resets, z.B. die Entscheidung, ob und ggf. wie lange ein Alarm gespeichert bleiben soll.

Nachfolgend wird dies alles an Beispielen eingehend erläutert.

## Funktionsmanager (Fig. 5)

Fig. 5 zeigt ein Flussdiagramm mit einer möglichen Ausführungsform des in dem μC 23 ablaufenden Hauptprogramms in Form eines sogenannten Funktionsmanagers 601.

Das Hauptprogramm hat die Aufgaben, auf Ereignisse wie z.B. die Änderung des Signals HALL zu reagieren, ferner jeder Funktion bei Bedarf Ressourcen, insbesondere Rechenzeit, zur Verfügung zu stellen, und bei der Vergabe der Ressourcen Prioritäten zu beachten.

Nach dem Einschalten des Motors 32 wird in dem μC 23 ein interner Reset ausgelöst. In S600 erfolgt die Initialisierung des μC 23.

Nach der Initialisierung erfolgt ein Sprung in den Funktionsmanager 601, welcher in S602 beginnt. Als erstes werden die Funktionen abgearbeitet, die zeitkritisch sind und bei jedem Durchlauf abgearbeitet werden müssen. Hierzu zählen die Routinen "TACHO" in S602, "COMM" in S604, "A/D" in S606, "I_max" in S608 und "RGL" in S610.

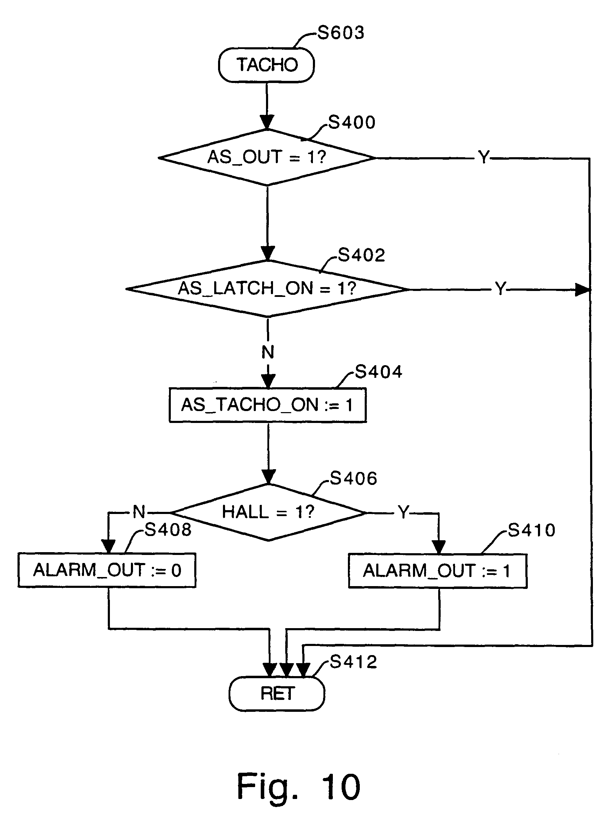

Mit der Routine S603 ("TACHO") kann das Signal HALL an dem Ausgang ALARM_OUT 88 (Fig. 1) ausgegeben werden. Um ein möglichst mit dem Signal HALL identisches Signal an ALARM_OUT 88 (Fig. 1) ausgeben zu können, wird die Funktion "TACHO" als erste ausgeführt. Die Routine TACHO wird nachfolgend bei Fig. 10 näher beschrieben.

In der Funktion "COMM" (S604) wird die Kommunikation mit dem Busanschluss 80 über die Leitung 82 (Fig. 1) überwacht. Bei einer Baudrate von z.B. 2 k muss der Bus 82 alle 250 μs überprüft werden.

In S606 wird durch die Funktion "A/D" der A/D-Wandler 60 (Fig. 1) abgefragt. Der A/D-Wandier digitalisiert die als Potential am Punkt 66 vorliegende Temperatur am NTC-Widerstand 62. In S608 wird eine ggf. vorhandene Motorstrombegrenzungsroutine "I_max" ausgeführt, die ebenfalls zeitkritisch ist.

Die Funktion "RGL" zur Regelung der Drehzahl n wird in S610 aufgerufen.

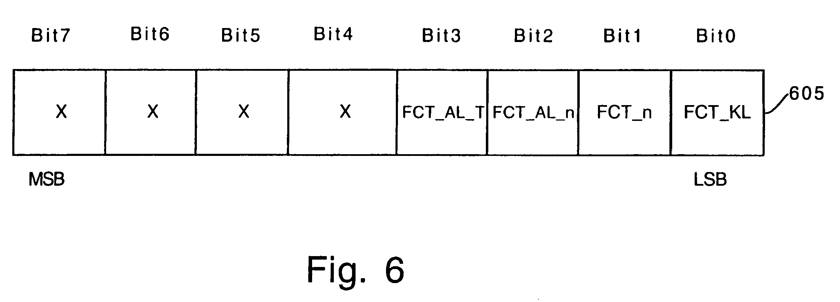

Fig. 6 zeigt ein beispielhaftes Funktionsregister 605, in dem für jede der Funktionen in S622, S626, S630 und S634 ein Bit reserviert ist.

In diesem Beispiel ist das Funktionsregister 605 ein Byte groß, und es sind, von dem niederwertigsten Bit (LSB) beginnend, die folgenden Anforderungsbits für die unten erklärten anforderbaren Funktionen definiert

- FCT_KL für die Kennlinienfunktion,
- FCT_n für die Drehzahlberechnungsfunktion,
- FCT_AL_n für die Alarm-Drehzahl-Kontrolle,
- FCT_AL_T für die Alarm-Temperatur-Kontrolle.

Die restlichen Bits sind für zusätzliche anforderbare Funktionen reserviert, die bei Bedarf in den Funktionsmanager eingefügt werden können.

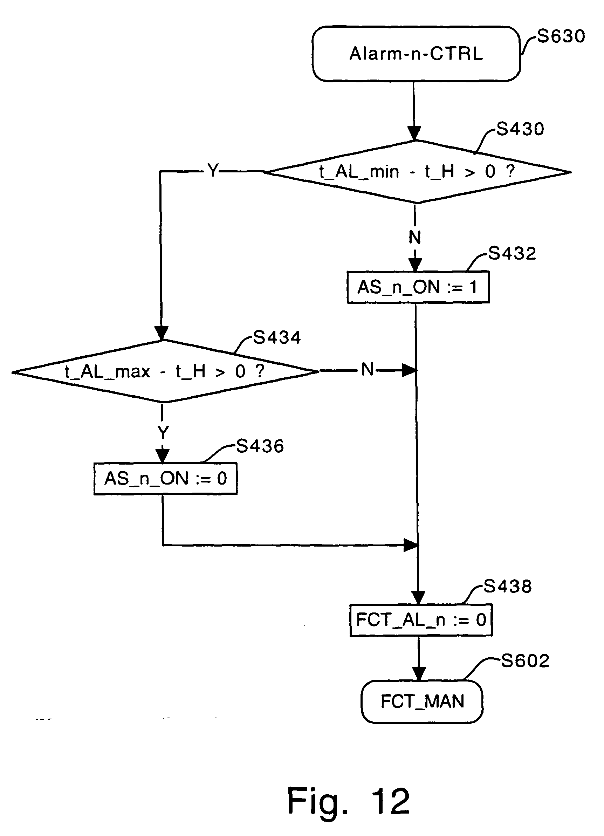

Soll eine bestimmte anforderbare Funktion durch eine andere Funktion oder eine Interruptroutine angefordert werden, so wird das Bit der anzufordernden Funktion auf 1 gesetzt, z.B. FCT_AL_n := 1. Wenn dann der Funktionsmanager 601 bei einem auf diese Anforderung folgenden Durchlauf keine andere anforderbare Funktion mit höherer Priorität findet, wird in diesem Fall die Funktion in S630 (Fig. 12) aufgerufen, also die Alarm-Drehzahl-Kontrolle.

Ist eine angeforderte Funktion abgearbeitet, so setzt sie ihr Bit in dem Funktionsregister 605 wieder auf 0, z.B. FCT_AL_n := 0 in S438 von Fig. 12.

Nachdem die anforderbare Funktion ausgeführt wurde, wird wieder nach S602 an den Anfang "FCT_MAN" des Funktionsmanagers 601 gesprungen.

In Fig. 5 wird nach S610 in einer vorbestimmten Reihenfolge, ab der wichtigsten anforderbaren Funktion, geprüft, ob deren Anforderungsbit gesetzt ist. Ist dies der Fall, so wird die angeforderte Funktion ausgeführt. Je höher eine solche Funktion in dem Funktionsmanager 601 steht, desto höher ist ihre Priorität.

In S620 wird überprüft, ob das Anforderungsbit FCT_KL gesetzt ist. Ist es gesetzt, so wird die Kennlinienfunktion in S622 aufgerufen. Diese dient dazu, einer bestimmten Temperatur T, die mit dem NTC-Widerstand 62 gemessen wurde, eine bestimmte Solldrehzahl n_s des Motors 32 zuzuordnen. Z.B. könnte einer Temperatur von 20° C eine Drehzahl von 1500 U/min zugeordnet werden.

Ist in S624 FCT_n gesetzt, so wird die Drehzahlberechnungsfunktion (n-Calc) in S626 aufgerufen. Hierzu wird auf die Gleichungen (2) bis (4) verwiesen, die mit dieser Funktion realisiert werden können.

Ist in S628 FCT_AL_n gesetzt, so wird die Alarm-Drehzahl-Kontrolle (Alarm—n—CTRL) in S630 aufgerufen. Diese wird nachfolgend anhand von Fig. 12 näher beschrieben. An ihrem Ende wird in S438 FCT_AL_n auf Null zurückgesetzt.

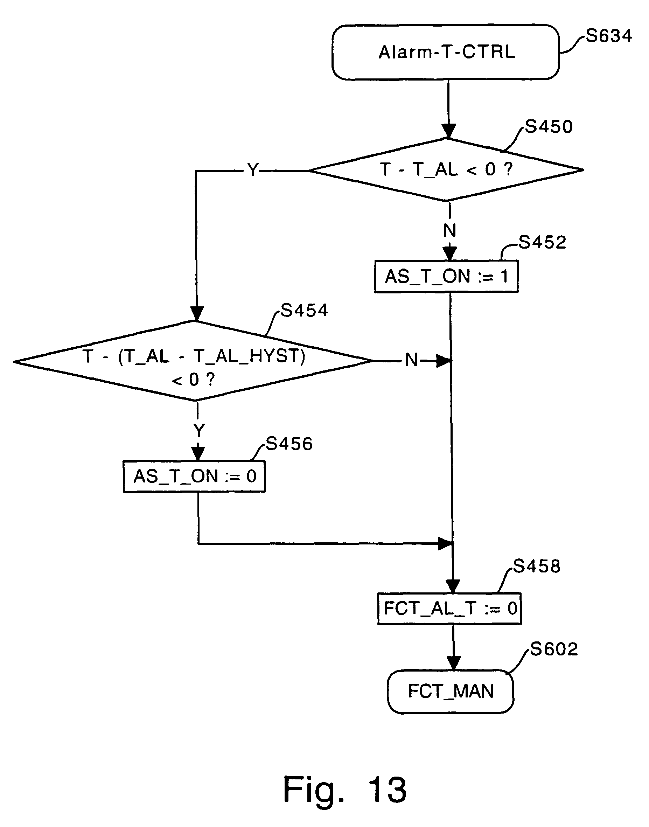

Ist in S632 FCT_AL_T gesetzt, so wird die Alarm-Temperatur-Kontrolle (Alarm-T-CTRL) in S634 aufgerufen. Diese wird anhand von Fig. 13 beschrieben. An ihrem Ende wird bei S458 FCT_AL_T auf Null zurückgesetzt.

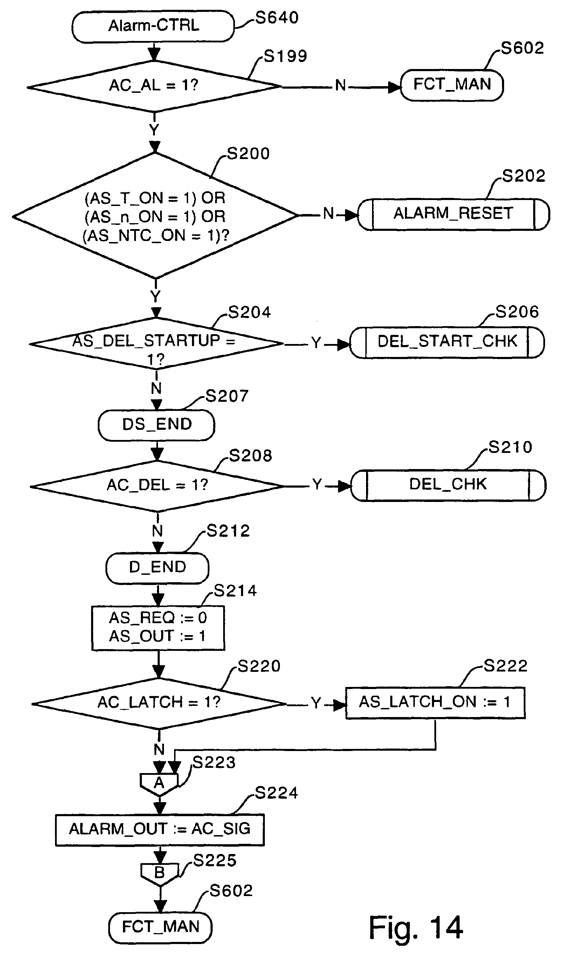

War keines der Anforderungsbits des Funktionsregisters 605 gesetzt, so wird eine Alarm-Kontrolle (Alarm-CTRL) in S640 ausgeführt und nach S602 zurückgesprungen. Die Alarm-Kontrolle wird nachfolgend bei Fig. 14 beschrieben, eine Variante bei Fig. 19.

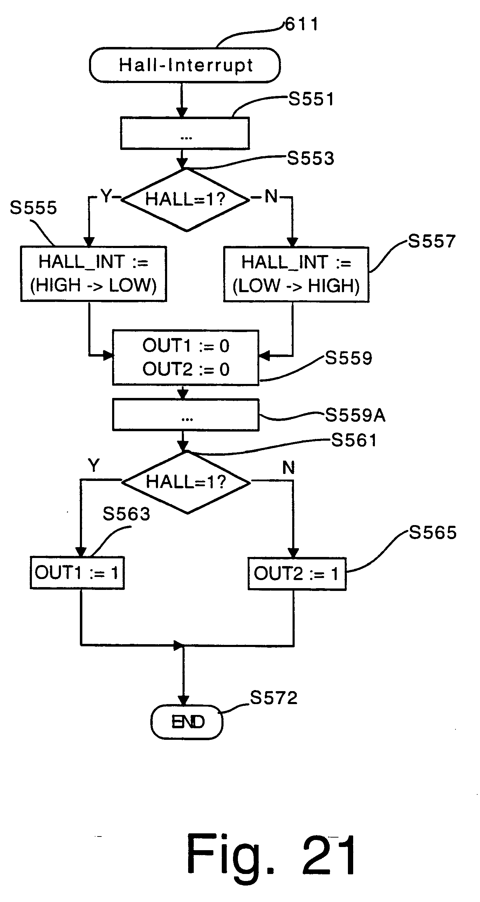

Fig. 5 zeigt symbolisch einen Hall-Interrupt 611, der die höchste Priorität L1 (Level 1) hat. Er unterbricht alle Prozesse des Funktionsmanagers 601, wie durch den Pfeil 613 symbolisiert, um eine präzise Kommutierung des Motors 32 zu erhalten. Das Flussdiagramm des Hall-Interrupts 611 ist in Fig. 21 beispielhaft dargestellt.

Unter dem Hall-Interrupt 611 ist bei 615 ein TIMERØ-Interrupt des Timers 98 (Fig. 1) dargestellt. Dieser hat eine niedrigere Priorität L2 und unterbricht alle Prozesse unter ihm, wie durch den Pfeil 617 angedeutet.

Wenn der Hall-Interrupt 611 und der Timer-Interrupt 615 gleichzeitig angefordert würden, würden sie nach der Reihenfolge ihrer Priorität abgearbeitet.

Die nachfolgenden Funktionen haben eine immer niedrigere Priorität, von L3 für die Funktion "TACHO" in S603 bis L12 für die Alarm-Kontrolle in S640.

Auf diese Weise gelingt es, die verschiedenen "Bedürfnisse" des Motors 32 in eine vorgegebene Hierarchie einzuordnen und die Ressourcen des µC 23 optimal für den Betrieb des Motors 32 zu nutzen. Die Alarm-Kontrolle (Alarm-CTRL) S640 ist nicht zeitkritisch und kann deshalb eine niedrige Priorität haben. Sie könnte alternativ auch als anforderbare Funktion ausgebildet werden.

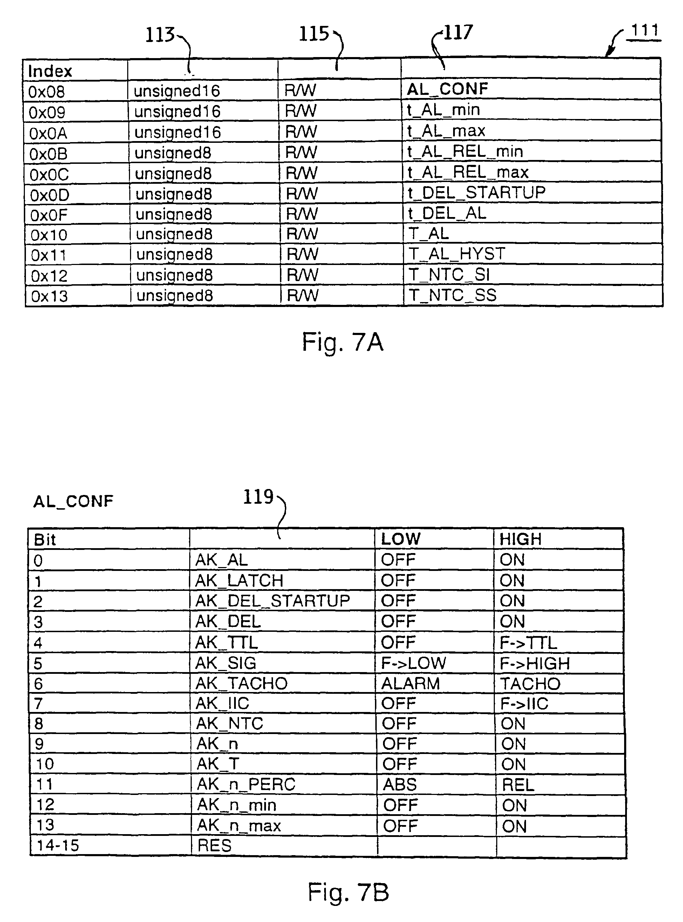

### Objekttabelle (Fig. 7A)

**Fig. 7A** zeigt eine Objekttabelle 111 mit Objekten (Datenwörtern), welche Alarmkonfigurationsparameter für den Motor 32 enthalten. Die Objekte weisen einen Index, einen Speichertyp (Spalte 113), Zugriffsrechte (Spalte 115) und einen Namen (Spalte 117) auf. Die Objekttabelle 111 wird im EEPROM 74 gespeichert, und ihr Inhalt kann über den Bus 82 verändert werden, um die Konfiguration des Motors 32 zu ändern.

Der Index ist hexadezimal angegeben, wobei ein 0x vor einer Zahl immer für hexadezimal steht. Der Speichertyp 113 ist entweder unsigned16, also zwei Byte ohne Vorzeichenbit, oder unsigned8, also ein Byte ohne Vorzeichenbit. Die Zugriffsrechte 115 sind R (Read)/W (Write), d.h. die Objekte können ausgelesen und verändert werden. Der Namen 117 eines Objekts dient zum leichteren Gebrauch. Es bedeuten

| | |
|---|---|
| **AL_CONF** | Alarmkonfigurationswort (vgl. Fig. 7B) |
| **t_AL_min** | untere Alarmdrehzahlgrenze (absolute Hallzeit) |
| **t_AL_max** | obere Alarmdrehzahlgrenze (absolute Hallzeit) |
| **t_AL_REL_min** | untere relative Alarmdrehzahlgrenze |
| **t_AL_REL_max** | obere relative Alarmdrehzahlgrenze |
| **t_DEL_STARTUP** | Hochlaufverzögerungszeit für Alarm |
| **t_DEL_AL** | Verzögerungszeit für Alarm |
| **T_AL** | Alarmtemperatur |
| **T_AL_HYST** | Hysteresewert für Alarmtemperatur |
| **T_NTC_SI** | Temperaturgrenze für Sensorabriss |
| **T_NTC_SS** | Temperaturgrenze für Sensorkurzschluss |

Durch Hinzufügen von Objekten ist die Objekttabelle 111 beliebig erweiterbar.

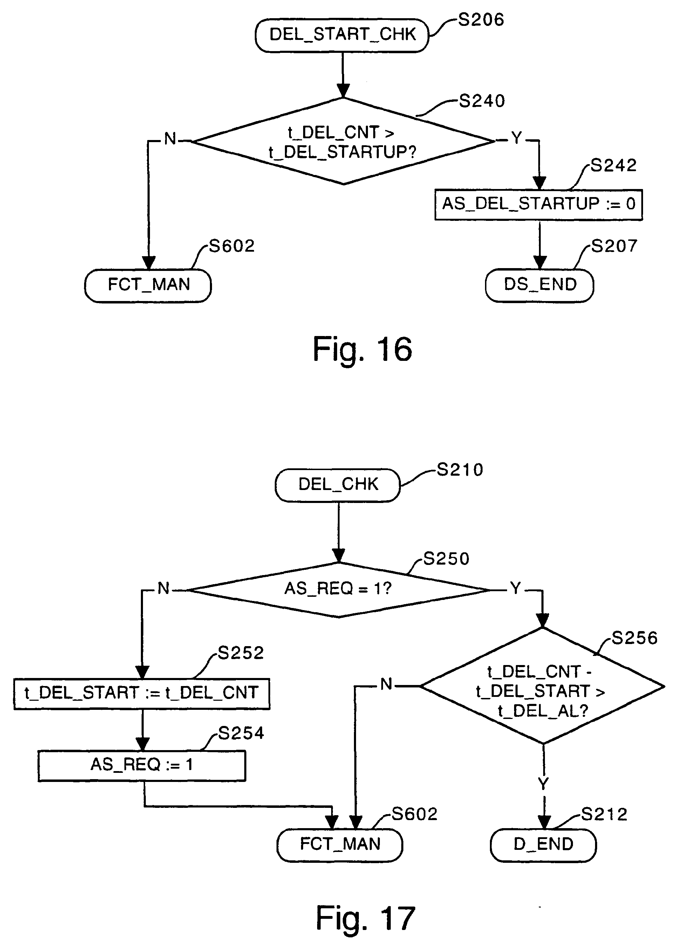

Die Zeit t_DEL_STARTUP ist zu unterscheiden von der Zeit t_DEL_START, die bei Fig. 16 für die Alarmverzögerung verwendet wird und die eine programminterne Variable darstellt.

Die Objekttabelle 111 wird in einem nichtflüchtigen Speicher, in diesem Ausführungsbeispiel in dem EEPROM 74 (Fig. 1), gespeichert. Nach jedem Reset des µC 23 wird bei der Initialisierung in S600 (Fig. 5) die Objekttabelle 111 aus dem EEPROM 74 über die Funktion "CTRL EEPROM" 72 in das RAM 97 des µC 23 übertragen und steht daraufhin dem in dem µC 23 ablaufenden Programm (Fig. 5) zur Verfügung. Für einen sichereren Betrieb des Motors 32 kann es vorteilhaft sein, diese Initialisierung zyklisch in bestimmten Zeitabständen zu wiederholen.

Eine Änderung der Objekte in der Objekttabelle (im EEPROM 74), und damit eine Änderung der Alarmkonfiguration, erfolgt über den Busanschluss 80, die Funktion "COMM" 78 und die Funktion "CTRL EEPROM" 71. Die Alarmkonfiguration (im EEPROM 74) erfolgt beim Hersteller nach den Wünschen des Kunden, oder der Kunde erhält die Möglichkeit, sie selbst zu ändern.

Durch die offene Struktur der Objekttabelle 111 ist es möglich, neue Objekte über ein standardisiertes Verfahren hinzuzufügen.

**Fig. 7B** erläutert das Objekt mit dem Namen **AL_CONF** (Alarmkonfiguration) und dem Index 0x08 näher. Das Objekt hat den Speichertyp (Spalte 113 in Fig. 7A) unsigned16 und ist damit 16 Bit groß. Die Bits sind in Fig. 7B von 0 bis 15 durchnumeriert. Der Namen des jeweiligen Bits ist in der Spalte 119 angegeben, und die Spalten LOW und HIGH geben an, was der jeweilige Zustand bei dem Bit bedeutet.

**AK_AL** gibt an, ob die Alarmfunktion überhaupt aktiviert sein soll (HIGH), oder nicht (LOW).

**AK_LATCH** auf HIGH bedeutet, dass ein Alarm gespeichert werden soll, bis er durch ein externes Ereignis wie z.B. einen Befehl über den Busanschluss 80 zurückgesetzt wird. LOW bedeutet dagegen, dass der Alarm sofort nach dem Entfallen des Alarmgrundes zurückgesetzt, also nicht länger gespeichert wird.

Mit **AK_DEL_STARTUP** wird eingestellt, ob beim Hochlauf (Startup) des Motors eine Alarmverzögerung stattfinden soll (HIGH) oder nicht (LOW). Ist AK_DEL_STARTUP = HIGH, so wird der Alarm erst nach der in dem Objekt t_DEL_STARTUP angegebenen Zeit aktiviert.

Durch **AK_DEL** wird eingestellt, ob nach dem Auftreten einer Alarmanforderung sofort ein Alarm ausgelöst werden soll (LOW) oder, ob eine in dem Objekt **t_DEL_AL** angegebene Zeit vor dem Auslösen des Alarms gewartet werden soll.

Mit **AK_TTL** wird eingestellt, ob bei einem Fehler ein Signal über eine TTL-Leitung ausgegeben werden soll. Dies kann z.B. der Ausgang ALARM_OUT 88 sein.

Ist **AK_SIG** auf LOW, so wird bei einem Alarm F der Ausgang ALARM_OUT 88 (Fig. 1) auf LOW gesetzt, liegt kein Alarm vor, so ist ALARM_OUT 88 auf HIGH. Bei AK_SIG = HIGH ist dies genau umgekehrt. Mit AK_SIG kann man also auswählen, welches logische Signal am Ausgang ALARM_OUT 88 erzeugt werden soll. Dies wird nachfolgend bei Fig. 19 und 20 näher erläutert.

**AK_TACHO** bestimmt, ob ein Tachosignal (Beschreibung zu Fig. 10) über den Ausgang ALARM_OUT 88 ausgegeben werden soll, wenn kein Alarm vorliegt.

Mit **AK_IIC** kann festgelegt werden, ob bei einem Fehler eine Information über einen IIC-Bus ausgegeben werden soll. Dies kann über die Funktion "COMM" 78 auf den als IIC-Bus ausgebildeten Bus 82 geschehen (Fig. 1).

Mit **AK_NTC** wird festgelegt, ob bei einem Sensorabriss, also einem Defekt des NTC-Widerstands, ein Alarm ausgelöst werden soll (HIGH), oder nicht (LOW).

Über **AK_n** wird festgelegt, ob eine Drehzahlüberwachung stattfinden soll (HIGH), oder nicht (LOW).

Über **AK_T** kann festgelegt werden, ob eine Temperaturüberwachung stattfinden soll (HIGH), oder nicht (LOW).

Ist **AK_n_PERC** auf HIGH, so werden als relative Alarmdrehzahlgrenzen die Werte der Objekte t_AL_REL_min und t_AL_REL_max (Fig. 7A) verwendet. Die Alarmdrehzahlgrenze wird dann als Prozentsatz der Solldrehzahl berechnet. Ist AK_n_PERC dagegen auf LOW, so werden als absolute Drehzahlgrenzen die Objekte t_AL_min und t_AL_max (Fig. 7A) verwendet.

Mit **AK_n_min/AK_n_max** wird eingestellt, ob die untere/obere Drehzahlgrenze verwendet werden soll (HIGH), oder nicht (LOW).

Die Bits 14 und 15 werden in diesem Ausführungsbeispiel nicht benutzt und sind für weitere Konfigurationen reserviert.

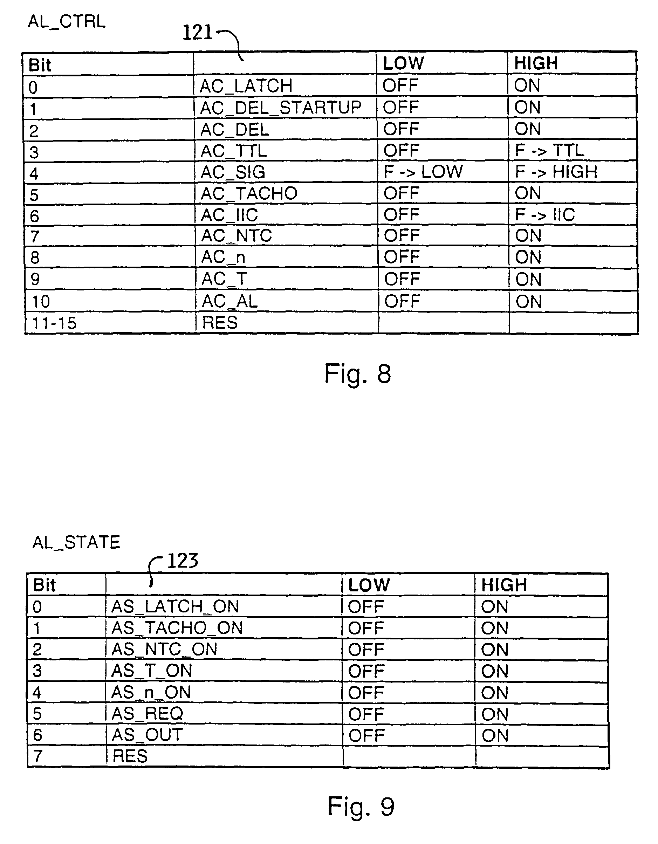

**Steuerwort (Fig. 8) und Statuswort (Fig. 9)**

**Fig. 8** zeigt ein Steuerwort AL_CTRL und Fig. 9 ein Statuswort AL_STATE. Diese liegen - im Gegensatz zu den Objekten aus Fig. 7A und 7B - im Normalfall nur im RAM 97 des µC 23 vor und dienen dazu, einen Datenaustausch zwischen dem Betriebssystem (Fig. 5) und den einzelnen Alarmfunktionen zu verwirklichen.

Das Steuerwort **AL_CTRL** der Fig. 8 wird nach einem Reset des µC 23 in S600 mit den zugehörigen Werten aus dem Objekt AL_CONF (Fig. 7A, 7B) gefüllt. In Fig. 8 ist der Namen des Bits in der Spalte 121 angegeben.

Das Statuswort **AL_STATE** (Fig. 9) wird ebenfalls in S600 initialisiert. Es enthält den jeweiligen Status der momentanen Speicherung eines Alarms **(AS_LATCH_ON),** des Tachosignals **(AS_TACHO_ON),** des Sensorabrissalarms **(AS_NTC_ON),** des Temperaturalarms **(AS_T_ON),** des Drehzahlalarms **(AS_n_ON),** der Alarmverzögerung **(AS_REQ),** und der Ausgabe **(AS_OUT)** auf den Ausgang ALARM_OUT 88 (Fig. 1). Das Bit 7 wird in diesem Ausführungsbeispiel nicht benutzt (Reserve). Der Namen des betreffenden Bits ist in Fig. 9 in der Spalte 123 angegeben.

**Fig. 10** zeigt die Funktion "TACHO" (S603 in Fig. 5), welche bei normalem Betrieb, also wenn kein Alarm ausgelöst ist, ein dem Signal HALL (Fig. 1, 3) entsprechendes Signal am Ausgang ALARM_OUT 88 ausgibt, also Impulse mit einer Frequenz, die von der Motordrehzahl abhängt.

In S400 wird anhand des Statuswortbits AS_OUT geprüft, ob gerade ein Alarmsignal ausgegeben wird. Falls AS_OUT = 1 ist, wird sofort die Funktion "TACHO" durch einen Sprung zu S412 verlassen, da der Alarm nicht überschrieben werden darf.

In S402 wird überprüft, ob der Alarm gespeichert werden soll, bis er von einem externen Signal zurückgesetzt wird. Ist das Statuswortbit AS_LATCH_ON = 1, so wird deshalb ebenfalls zum Ende S412 gesprungen.

In S404 wird das Statuswortbit AS_TACHO_ON auf 1 gesetzt. Damit wird angezeigt, dass ein Tachosignal ausgegeben wird.

In S406 wird überprüft, ob das Signal HALL (Fig. 3) im Augenblick 0 oder 1 ist, und dementsprechend wird der Ausgang ALARM_OUT 88 in S408 auf 0 bzw. in S410 auf 1 gesetzt. In S412 wird von der Funktion "TACHO" zurückgesprungen. Man erhält dadurch am Ausgang 88 (Fig. 1) Impulse, welche im wesentlichen dem Signal HALL entsprechen.

**Fig. 11** zeigt ein Flussdiagramm mit einem Ausschnitt der Funktion "A/D" S606 (Fig. 6).

In S416 wird das Potential am Eingang 57 des A/D-Wandlers 60 (Fig. 1) mit dem Befehl AD(AD_T) eingelesen und in T gespeichert. Der Wert T entspricht einer aktuellen Temperatur am NTC-Widerstand 62, z.B. 84° C.

In S418 wird überprüft, ob Abriss oder Kurzschluss des Sensors vorliegt.

Ein Sensorabriss liegt vor, wenn die Verbindung zum NTC-Widerstand 62 an der Stelle 62a oder 62b (Fig. 1) unterbrochen ist. In diesem Fall ist der Wert für T kleiner als ein Sensorabrisswert T_NTC_SI (Fig. 7A), da der Widerstand 62 scheinbar den Wert Unendlich hat, was einer sehr tiefen Temperatur entsprechen würde.

Ein Sensorkurzschluss liegt vor, wenn ein Kurzschluss zwischen den Stellen 62a und 62b entstanden ist. In diesem Fall ist der Wert T größer als ein Sensorkurzschlusswert T_NTC_SS (Fig. 7A), da der Widerstand 62 scheinbar den Wert Null hat, was einer sehr hohen Temperatur entsprechen würde.

Falls ein Sensorabriss oder Sensorkurzschluss vorliegt, so wird nach S420 gesprungen. Da die wirkliche Temperatur in diesen beiden Fällen nicht bekannt ist, wird T auf eine Termperaturkonstante T_MAX gesetzt, welche einer hohen Temperatur entspricht, und durch das Setzen von AS_NTC_ON auf 1 wird ein Alarm angefordert.

Liegt in S418 kein Sensorabriss oder -kurzschluss vor, so wird in S422 AS_NTC_ON auf 0 gesetzt, und es wird weiter nach S424 gesprungen.

In S424 folgen eventuell weitere Schritte, z.B. der Aufruf einer Kennlinienfunktion, und bei S426 endet die A/D-Routine.

**Fig. 12** zeigt ein Ausführungsbeispiel für die Funktion "Alarm-Drehzahl-Kontrolle" (Alarm-n-CTRL) S630 der Fig. 5. Diese wird aufgerufen, wenn das Bit FCT_AL_n aus dem Funktionsregister (Fig. 6) gesetzt ist, was bevorzugt in einem definierten Zeitabstand nach einer neuen Berechnung der Hallzeit t_H (Fig. 3) geschieht.

In S430 wird verglichen, ob die momentane Hallzeit t_H kleiner als die untere Drehzahlgrenze in Form der Hallzeit t_AL_min (Fig. 7A) ist. Falls nicht, so ist der Motor 32 zu langsam, und das Statuswortbit AS_n_ON wird in S432 auf 1 gesetzt, und es wird damit ein Drehzahlalarm angefordert. (Dieser wird in Fig. 14, S200, eingeleitet). Falls t_H < t_AL_min war, so ist der Motor 32 schnell genug, und es wird nach S434 gesprungen.

In S434 wird anhand einer oberen Drehzahlgrenze in Form der Hallzeit t_AL_max (Fig. 7A) überprüft, ob die Motordrehzahl über dieser oberen Grenze liegt. Nur in diesem Fall wird das Statuswortbit AS_n_ON in S436 wieder auf 0 zurückgesetzt. So wird eine Hysterese erreicht, welche verhindert, dass die Drehzahlalarmanforderung andauernd gesetzt und wieder gelöscht wird.

In S438 wird FCT_AL_n (Fig. 6) wieder auf 0 gesetzt, da die Funktion "Drehzahl-Alarm-Kontrolle" voll abgearbeitet ist.

**Fig. 13** zeigt ein Ausführungsbeispiel für die Routine "Alarm-Temperatur-Kontrolle" (Alarm-T-CTRL) S634 der Fig. 5. Nach jeder Bestimmung der Temperatur in der Funktion "A/D" S606 wird das Funktionsregisterbit FCT_AL_T (Fig. 6) auf 1 gesetzt. Erreicht der Funktionsmanager 601 den Schritt S632, so wird die Funktion "Alarm-Temperatur-Kontrolle" S634 gemäß Fig. 13 aufgerufen.

In S450 wird überprüft, ob die Temperatur T am NTC-Widerstand 62 (Fig. 1) kleiner als die Alarmtemperatur T_AL (Fig. 7A) ist. Falls nicht, ist die Temperatur T zu hoch, und ein Temperaturalarm wird durch Setzen von AS_T_ON auf 1 in S452 angefordert. Diese Anforderung wird in Fig. 14, S200, abgearbeitet.

Ist T < T_AL, so wird in S454 analog zu Fig. 12 eine Hysterese eingeführt. Ist der Wert T auch kleiner als der Wert (T_AL - T_AL_HYST), wobei T_AL_HYST (Fig. 7A) z.B. einer Temperatur von 3K (Kelvin) entspricht, so wird die Temperaturalarmanforderung durch Setzen von AS_T_ON auf 0 in S456 zurückgesetzt, ansonsten wird direkt nach S458 gesprungen.

In S458 wird FCT_AL_T auf 0 gesetzt, da die Funktion fertig abgearbeitet ist. Daraufhin wird in Fig. 5 wieder zum Anfang des Funktionsmanagers "FCT_MAN" S602 gesprungen.

Es wird also ein Alarm angefordert, wenn die Temperatur T größer als die Temperatur T_AL wird, und die Alarmanforderung wird zurückgesetzt, wenn die Temperatur wieder kleiner als (T_AL - T_AL_HYST) wird.

Die Fig. 14 bis 17 zeigen ein Ausführungsbeispiel der Funktion "Alarm-Kontrolle" (S640 in Fig. 4 und 5).

In S199 in **Fig. 14** wird überprüft, ob AC_AL = 1 (Fig. 8) ist. Falls nein, so ist die Alarmfunktion deaktiviert, und es wird sofort zurück zu "FCT_MAN" S602 (Fig. 5) gesprungen. Ansonsten wird nach S200 gesprungen.

In S200 in wird anhand von AS_T_ON, AS_n_ON, AS_NTC_ON (Fig. 9) geprüft, ob ein Alarm angefordert wurde. Falls kein Alarm angefordert wurde, wird nach "ALARM_RESET" S202 gesprungen. Die Routine S202 ist in Fig. 15 dargestellt.

War in S200 ein Alarm angefordert, so wird in S204 anhand des Statuswortbits AS_DEL_STARTUP überprüft, ob die Hochlaufverzögerung aktiv ist. Falls ja, so wird zu S206 gesprungen, und die Routine der Fig. 16 wird durchgeführt, um die Hochlaufzeit zu überwachen. Das Statuswortbit AS_DEL_STARTUP wird in dem Schritt "INIT" S600 auf 1 gesetzt, falls das Steuerwortbit (Fig. 8) AC_DEL_STARTUP = 1 ist. Ist jedoch AC_DEL_STARTUP = 0, so wird AS_DEL_STARTUP auch auf 0 gesetzt, und es findet keine Hochlaufverzögerung statt. Nach Ablauf der Hochlaufzeit wird in Fig. 16, S242, AS_DEL_STARTUP auf Null gesetzt, also deaktiviert.

S207 ist eine Sprungmarke (Label) DS_END, zu der von Schritt S242 in Fig. 16 gesprungen wird.

In S208 wird anhand des Steuerwortbits AC_DEL (Fig. 8) geprüft, ob in den Schritten S210 und den folgenden Schritten in Fig. 17 eine Alarmverzögerung (vgl. S322 in Fig. 4) ausgeführt werden soll.

S212 ist eine Sprungmarke (Label) D_END, zu der von dem Programmteil aus Fig. 17 gesprungen wird (S256 in Fig. 17).

In S214 wird AS_REQ (Fig. 9) auf 0 gesetzt, damit beim nächsten Durchlauf wieder eine Alarmverzögerung stattfindet, und das Statuswortbit AS_OUT (Fig. 9) wird auf 1 gesetzt, da im folgenden das Alarmsignal ausgegeben wird.

In S220 wird anhand des Steuerwortbits AC_LATCH (Fig. 8) geprüft, ob der Alarm gespeichert werden soll. Falls ja, so wird in S222 das Statuswortbit AS_LATCH_ON (Fig. 9) auf 1 gesetzt, ansonsten wird direkt nach S223 gesprungen.

Die Punkte A 223 und B 225 verweisen auf eine mögliche Erweiterung, die in Fig. 19 dargestellt ist.

In S224 wird schließlich der Ausgang ALARM_OUT 88 (Fig. 1) auf die durch das Steuerwortbit AC_SIG (Fig. 8) vorgegebene Alarmflanke (High oder Low) gesetzt. Durch AC_SIG wird also die Art des Ausgangssignals bestimmt, wie sie vom Kunden gewünscht wird, um dessen Geräte zu steuern. Daraufhin wird wieder zu "FCT_MAN" S602 (Fig. 5) gesprungen.

**Fig. 15** zeigt den Programmteil "ALARM_RESET" S202 der Funktion "Alarm-Kontrolle" S640 (Fig. 14), welcher ausgeführt wird, falls kein Alarm angefordert ist.

In S230 wird anhand des Steuerwortbits AC_LATCH (Fig. 8) überprüft, ob ein eventuell vorhandener ausgelöster Alarm gespeichert werden soll. Falls ja, so wird direkt zu S239 gesprungen.

Die Punkte C S231 und D S235 verweisen auf eine mögliche Erweiterung, die in Fig. 20 dargestellt ist.

Ansonsten wird in S232 anhand des Steuerwortbits AC_TACHO geprüft, ob ein Tachosignal am Ausgang ALARM_OUT 88 (Fig. 1) ausgegeben werden soll. Ist dies der Fall, so darf das Tachosignal hier nicht überschrieben werden, und es wird ebenfalls zu S239 gesprungen.

Falls nicht, so wird in S234 der Ausgang ALARM_OUT 88 auf die zu der durch AC_SIG definierten Flanke entgegengesetzte Flanke gesetzt. Ist z.B. AC_SIG = 1 (HIGH), so wird ALARM_OUT auf 0 (LOW) gesetzt. Dadurch wird ein Alarmsignal gespeichert.

In S239 wird das Steuerwortbit AS_REQ (Fig. 9) auf 0 gesetzt, damit bei dem nächsten Alarm wieder eine Alarmverzögerung stattfindet, und das Steuerwortbit AS_OUT (Fig. 9) wird ebenfalls auf 0 gesetzt, da im Moment kein Alarm ausgelöst ist.

Daraufhin wird an den Anfang "FCT_MAN" S602 des Funktionsmanagers 601 (Fig. 5) gesprungen.

**Fig. 16** zeigt einen Programmteil für die Hochlaufverzögerung, welcher in der Funktion "Alarm-Kontrolle" von S204 aus (Fig. 14) angesprungen wird.

Für die Alarmverzögerung, sowohl beim Hochlauf als auch bei der Anforderung eines Alarms, wird ein Zähler t_DEL_CNT verwendet, der mit Hilfe eines Timers, z.B. TIMERØ 98, z.B. alle 0,5 s inkrementiert wird. Der Zähler t_DEL_CNT wird in diesem Ausführungsbeispiel in dem Schritt "INIT" S600, der nach jedem Reset des Motors 32 ausgeführt wird, mit 0 initialisiert.

In S240 wird überprüft, ob der Zähler t_DEL CNT größer als die Hochlaufverzögerungszeit t_DEL_STARTUP ist. Falls ja, so ist der Motor 32 bei einem Beispielwert t_DEL_STARTUP = 60 schon länger als 30 s in Betrieb, und in S242 wird das Statuswortbit AS_DEL_STARTUP (im RAM 97) auf 0 gesetzt, da die Hochlaufverzögerung beendet ist.

Von S242 erfolgt ein Sprung nach "DS_END" S207, vgl. Fig. 14, Mitte, und anschließend wird die Alarmverzögerung ausgeführt.

Ist t_DEL_CNT < t_DEL_STARTUP, so wird zurück zu "FCT_MAN" S602 gesprungen, da die Hochlaufzeit noch nicht abgelaufen ist und folglich kein Alarm ausgelöst werden darf.

**Fig. 17** zeigt einen Programmteil, welcher die Alarmverzögerung bewirkt. Ist in S208 (Fig. 14) das Steuerwortbit (Fig. 8) AC_DEL = 1, d.h. die Alarmverzögerung ist eingeschaltet, so wird zu der Marke (Label) "DEL_CHK" S210 gesprungen.

In S250 wird das Statuswortbit AS_REQ (Fig. 9) überprüft. Hat es den Wert 0, so ist eine neue Alarmanforderung aufgetreten, und die Verzögerungszeit wurde noch nicht gestartet. Es wird nach S252 gesprungen.

In S252 wird der Wert des Zählers t_DEL CNT (Beschreibung zu Fig. 16) in t_DEL_START als Startwert der Verzögerungszeit gespeichert, und in S254 wird durch Setzen von AS_REQ (Fig. 9) auf 1 angezeigt, dass die Alarmverzögerung begonnen hat.

Hatte in S250 die Alarmverzögerung bereits begonnen (AS_REQ = 1), so wird in S256 überprüft, ob (t_DEL_CNT - t_DEL_START), also die Zeit seit dem Beginn der Alarmanforderung, größer als die in t_DEL_AL (Fig. 7A) bei der Konfiguration des Motors vorgegebene Alarmverzögerungszeit ist.

Falls ja, so wird nach "D_END" S212 (Fig. 14) gesprungen und bei S224 ein Alarm ausgelöst. Falls nein, wird zu "FCT_MAN" S602 gesprungen, und es wird noch kein Alarm ausgelöst.

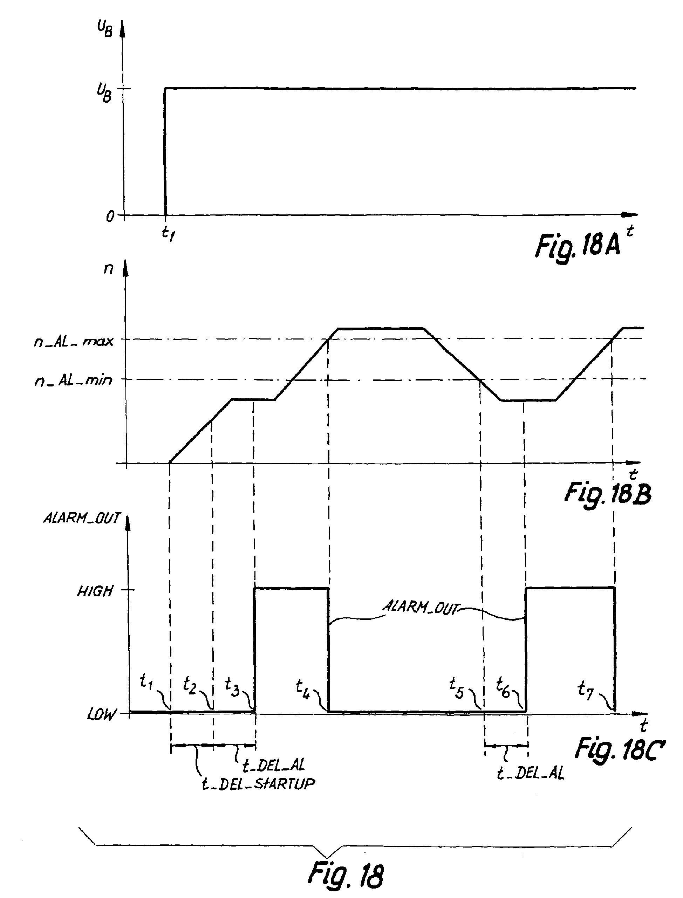

**Fig. 18** erläutert die Arbeitsweise an einem Beispiel. Fig. 18A zeigt die Betriebsspannung $U_B$, welche zum Zeitpunkt $t_1$ eingeschaltet wird. Fig. 18B zeigt einen Beispielverlauf der Drehzahl n des Motors 32. Fig. 18C zeigt das Signal ALARM_OUT 88 in Abhängigkeit der Drehzahl n aus Fig. 18B.

Durch das Einschalten der Betriebsspannung $U_B$ wird ein Power-Up-Reset des $\mu$C 23 ausgelöst, und der Zähler t_DEL_CNT (Fig. 16 und 17) wird mit 0 initialisiert.

Der Motor hat zum Zeitpunkt $t_1$ noch nicht die untere Alarmdrehzahlgrenze n_AL_min erreicht, so dass die Funktion "Alarm-Drehzahl-Kontrolle" (Fig. 12) in S232 einen Alarm anfordert.

In diesem Beispiel werden anstatt der Hallzeiten t_AL_min und t_AL_max bzw. t_AL_REL_min und t_AL_REL_max (Fig. 7A) die Drehzahlangaben n_AL_min und n_AL_max verwendet. Die Umrechnung zwischen Hallzeit t_H und Drehzahl n ist bei Fig. 3 erklärt.

Zum Zeitpunkt $t_2$ erreicht der Zähler t_DEL_CNT den durch die Konfiguration vorgegebenen Wert t_DEL_STARTUP (Fig. 7A und 16), und da in diesem Beispiel bei der Konfiguration die Alarmverzögerung aktiviert wurde (AC_DEL = 1), wird die Alarmverzögerung "DEL_CHK" S210 (Fig. 17) von S208 aus aufgerufen.

Zum Zeitpunkt $t_3$ ist auch die Alarmverzögerung t_DEL_AL (Fig. 7A) abgelaufen, die bei der Konfiguration des Motors vorgegeben wurde, d.h. eine Zeit t_DEL_AL ist nach dem Zeitpunkt $t_2$ vergangen.

In der Funktion "Alarm-Kontrolle" S640 (Fig. 5, 14) wird daraufhin in S224 ein Alarm ausgelöst. AC_SIG hat in diesem Beispiel den Wert 1, so dass der Ausgang ALARM_OUT 88 (Fig. 1) auf HIGH gesetzt wird.

Zum Zeitpunkt $t_4$ steigt die Drehzahl n über die obere Alarmdrehzahlgrenze n_AL_max. Die Funktion "Alarm-Drehzahl-Kontrolle" S630 (Fig. 12) setzt daraufhin in S236 die Alarmanforderung AS_n_ON auf 0 zurück, und in der Funktion "Alarm-Kontrolle" S640 (Fig. 14) wird im Schritt S200 zu "ALARM_RESET" S202 (Fig. 15) gesprungen. Dort wird, da in diesem Beispiel der Alarm nicht gespeichert (AC_LATCH = 0) und kein Tachosignal ausgegeben wird (AC_TACHO = 0), im Schritt S234 der Ausgang ALARM_OUT 88 wieder auf 0 gesetzt.

Zum Zeitpunkt t5 sinkt die Drehzahl n wieder unter die untere Drehzahlgrenze n_AL_min, und die Funktion "Alarm-Drehzahl-Kontrolle" S630 (Fig. 12) fordert in S232 einen Alarm an (AS_n_ON: = 1). Da die Hochlaufverzögerung schon abgeschlossen ist (AS_DEL_STARTUP = 0), wird in S208 von Fig. 14 nach "DEL_CHK" S210 (Fig. 17) gesprungen und dort in S252 der Startwert des Verzögerungszählers t_DEL_CNT in t_DEL_START gespeichert.

Erst zum Zeitpunkt t6 (Fig. 18C) ist der Wert (t_DEL_CNT - t_DEL_START) größer als die (durch die Konfiguration vorgegebene) Alarmverzögerungszeit t_DEL_AL, so dass zu diesem Zeitpunkt (wie zum Zeitpunkt t3) wieder ein Alarm durch Setzen von ALARM_OUT 88 auf HIGH ausgelöst wird, vgl. Fig. 18C.

Zum Zeitpunkt t7 steigt die Drehzahl n wieder über die obere Drehzahlgrenze n_AL_max. In der Funktion "Alarm-Drehzahl-Kontrolle" S630 (Fig. 5, 12) wird daraufhin in S236 die Alarmanforderung zurückgesetzt (AS_n_ON: = 0), und in der Funktion "Alarm-Reset" S202 (Fig. 4, 15) wird in S234 der Ausgang ALARM_OUT wieder auf 0 gesetzt.

Da die in der Objekttabelle 111 (Fig. 7A) angegebenen Objekte bei der Konfiguration des Motors 32 frei gewählt werden können, z.B. die Hochlaufverzögerung t_DEL_STARTUP, die Alarmverzögerung t_DEL_AL, die Alarmtemperatur T_AL, die verschiedenen Alarmdrehzahlen, und schließlich das Konfigurationswort gemäß Fig. 7B mit seinen zahlreichen Möglichkeiten, ergibt sich eine riesige Zahl von Varianten, wie der Motor 32 über den Bus 82 konfiguriert werden kann, ohne dass an seiner Hardware etwas geändert werden muss. Diese Möglichkeiten sind in Fig. 4 durch die Linien 310, 312, 314, 316 und 318 symbolisch angedeutet.

**Fig. 19** zeigt ein Flussdiagramm, welches verschiedene Arten der Ausgabe eines Alarms ermöglicht. Die Schritte S270 bis S276 ersetzen hierbei den Schritt S224 der Funktion "Alarmkontrolle" aus Fig. 14. Die Punkte A S223 und B S225 entsprechen den Punkten in Fig. 14.

Wenn ein Alarm ausgelöst werden soll, wird in S270 der Fig. 19 überprüft, ob das Steuerwortbit (Fig. 8) AC_TTL = 1 ist. Falls ja, wird in S272 ein Alarm über die Leitung ALARM_OUT 88 ausgegeben, ansonsten wird direkt zu S274 gesprungen.

In S274 wird überprüft, ob AC_IIC = 1 ist, vgl. Fig. 8. Falls ja, so soll über den IIC-Bus 82 (Fig. 1) ein Alarm ausgegeben werden. Hierzu wird in S276 die Funktion SEND_IIC aufgerufen, die einen Alarm und das Statuswort AL_STATE (Fig. 9) auf den IIC-Bus 82 ausgibt.

**Fig. 20** zeigt das zu dem Setzen des Alarmsignals in Fig. 19 zugehörige Zurücksetzen des Alarmsignals. Hierbei ersetzen die Schritte S290 bis S298 die Schritte S232 und S234 der Funktion "ALARM_RESET" aus Fig. 15. Die Punkte C S231 und D S235 entsprechen den Punkten in **Fig. 15**.

In S290 wird anhand des Steuerwortbits AC_TTL (Fig. 8) überprüft, ob ein Alarm über ALARM_OUT 88 (Fig. 1) ausgegeben wird. Falls ja, so wird in S292 überprüft, ob AC_TACHO (Fig. 8) gleich 1 ist. Falls ja, so wird der Ausgang ALARM_OUT 88 durch die Funktion "TACHO" (Fig. 10) gesteuert, ansonsten wird in S294 wie in S234 aus Fig. 15 der Ausgang ALARM_OUT 88 wieder zurückgesetzt.

In S296 wird überprüft, ob AC_IIC = 1 ist. Falls ja, so wird in S298 über die Funktion SEND_IIC auf den IIC-Bus 82 ausgegeben, dass kein Alarm mehr vorliegt.

Durch die Varianten nach Fig. 19 und 20 wird eine Selektion der Alarmausgabe ermöglicht, und diese ist über Objekte (der Fig. 8) steuerbar. Durch das Ändern der Bits AK_TTL und AK_IIC in dem Objekt AL_CONF (Fig. 7B) kann die Alarmausgabe konfiguriert werden.

**Fig. 21** zeigt die hier wesentlichen Teile einer "Hall-Interrupt"-Routine 611 (Fig. 5), welche beim Auftreten eines Hall-Interrupts (611 in Fig. 3) aufgerufen wird. Ein Hall-Interrupt 611 wird bei jedem Wechsel des Signals HALL (Fig. 3) von HIGH auf LOW bzw. LOW auf HIGH ausgelöst, also bei dem Beispiel aus Fig. 3 zu den Zeitpunkten t = 0; 2,5; 5; 7,5 und 10 ms.

Mit S551 sind generell Schritte bezeichnet, die zur Berechnung der HALL-Zeit t_H (Fig. 3) gehören, z.B. Stoppen eines entsprechenden Timers, etc.

In den Schritten S553, S555 und S557 wird im µC 23 die Flanke des Signals HALL, bei der der nächste Hall-Interrupt ausgelöst werden soll, eingestellt. Hierzu wird in S553 geprüft, ob HALL = 1 ist. Falls JA, wird in S555 die Flanke, bei der der nächste Hall-Interrupt ausgelöst werden soll, auf eine fallende Flanke (HIGH -> LOW) gesetzt. Falls nicht, wird in S557 die Auslösung auf eine steigende Flanke (LOW -> HIGH) gesetzt.

In S559 werden OUT1 und OUT2 auf Null gesetzt, d.h. der Motor 32 wird stromlos gemacht. Dies dient dazu, die H-Brücke 112 kurzzeitig zu unterbrechen, damit in ihr bei einer Kommutierung kein Kurzschluss entstehen kann.

In S559A können verschiedene Schritte ausgeführt werden, z.B. das erneute Starten eines (nicht dargestellten) Zählers für die Messung von t_H. Diese Programmschritte sollten z.B. 50 µs dauern.

In S561 bis S565 wird die Kommutierung durchgeführt. Ist in S561 HALL = 1, so wird in S563 OUT1 auf 1 gesetzt, wobei OUT2 weiterhin auf 0 bleibt, vgl. S559. Ist in S561 HALL = 0, so wird in S565 OUT2 auf 1 gesetzt, wobei OUT1 weiter auf 0 bleibt, vgl. S559.

Durch das Signal OUT1=1 werden die Transistoren 114 und 118 eingeschaltet, wie bereits beschrieben, und durch das Signal OUT2=1 werden die Transistoren 116 und 120 eingeschaltet.

Im Anschluss an die Schritte S563 oder S565 endet die Routine 611 bei S572. Die Signale OUT1 und OUT2 bleiben solange gespeichert, bis sie durch das Programm geändert werden.

Ggf. kann die Kommutierung auch etwas früher erfolgen als der jeweilige Hall-Interrupt, etwa nach Art der Frühzündung bei einem Kraftfahrzeug. Bei Elektromotoren wird das als Frühkommutierung bezeichnet.

Naturgemäß sind im Rahmen der vorliegenden Erfindung vielfache weitere Ergänzungen und Modifikationen möglich, wie sich für den Fachmann aus der vorstehenden Beschreibung klar ergibt. Z.B. kann es in vielen Fällen zweckmäßig sein, einen Passwortschutz vorzusehen, damit eine Änderung bestimmter Parameter nur durch den Hersteller möglich ist.

**Patentansprüche**

1. Verfahren zur Konfiguration einer Alarmvorrichtung eines Elektromotors (32), dem ein Mikrocontroller oder Mikroprozessor, im folgenden Mikroprozessor (23) genannt, eine Eingabe-Schnittstelle (80, 82) und ein Parameterspeicher (74; 109) zugeordnet sind,

   welches Verfahren folgende Schritte aufweist:

   Über die Eingabe-Schnittstelle (80, 82) wird mindestens ein Parameter (Objekttabelle 111) für die Konfiguration der Alarmvorrichtung des Motors eingegeben;
   der mindestens eine Parameter wird in dem Parameterspeicher (74; 109) gespeichert;
   der Ablauf mindestens einer in dem Mikroprozessor (23) vorgesehenen Routine der Alarmvorrichtung wird von diesem gespeicherten Parameter, oder einem von ihm abgeleiteten Parameter, beeinflusst.

2. Verfahren nach Anspruch 1, bei welchem der Motor (32) ein elektronisch kommutierter Motor ist und seine Kommutierung durch den Mikroprozessor (23) gesteuert wird.

3. Verfahren nach Anspruch 1 oder 2, bei welchem der Parameterspeicher als nichtflüchtiger Speicher (74) ausgebildet ist

4. Verfahren nach einem der vorhergehenden Ansprüche, bei welchem - zur Ausführung in dem Mikroprozessor (23) - eine Mehrzahl von Routinen vorgesehen ist, welche Elemente zur Auslösung eines Alarms bei vorgegebenen Alarmbedingungen aufweisen,
und eine Mehrzahl von Parametern über die Eingabe-Schnittstelle eingegeben wird, um den Ablauf mehrerer dieser Routinen zu beeinflussen.

5. Verfahren nach einem der vorhergehenden Ansprüche, bei welchem mindestens ein Ausgabesignal der Alarmvorrichtung über die Eingabe-Schnittstelle ausgegeben wird, welche als Eingabe/Ausgabe-Schnittstelle ausgebildet ist.

6. Verfahren nach einem der vorhergehenden Ansprüche für einen Motor, bei welchem mehrere Alternativen für die Ausgabe eines Signals der Alarmvorrichtung vorgesehen sind, und bei welchem die gewünschte Alternative **dadurch** festgelegt wird, dass ein entsprechender Parameter über die Eingabc-Schnittstelle im Parameterspeicher (74; 109) gespeichert wird.

7. Verfahren nach einem oder mehreren der vorhergehenden Ansprüche für einen Motor, der eine Ausgabevorrichtung (88) für die Ausgabe eines Alarmsignals (ALARM_OUT) aufweist,
wobei eine vom Mikroprozessor ausführbaren Routine zur Steuerung dieser Alarmvorrichtung vorgesehen ist, und ein Parameter zur Beeinflussung dieser Routine eingegeben wird, um die Alarmvorrichtung entsprechend diesem Parameter zu konfigurieren.

8. Verfahren nach einem oder mehreren der Ansprüche 4 bis 7 für einen Motor mit einer Mehrzahl von Ausgabevorrichtungen zur Ausgabe eines Alarmsignals, bei welchem mindestens ein Parameter eingegeben wird, um zu steuern, über welche der Ausgabevorrichtungen das mindestens eine Signal der Alarmvorrichtung ausgegeben wird.

9. Verfahren nach einem oder mehreren der vorhergehenden Ansprüche, bei welchem die Alarmvorrichtung eine Hochlaufverzögerung aufweist, durch welche bis zu einer vorgegebenen Zeit nach dem Einschalten des Motors das Auslösen eines Alarms unterdrückt wird.

10. Verfahren nach Anspruch 9, bei welchem zur Festlegung der Dauer der Hochtaufverzögerung ein entsprechender Parameter über die Eingabe-Schnittstelle eingegeben wird.

11. Verfahren nach einem oder mehreren der vorhergehenden Ansprüche, bei welchem die Alarmvorrichtung eine Alarmverzögerung aufweist, durch welche nach dem Auftreten einer Alarmbedingung während einer vorgegebenen Zeit das Auslösen eines Alarms unterdrückt wird, so dass ein Alarm nur ausgelöst wird, wenn nach Ablauf dieser vorgegebenen Zeit die Alarmbedingung fortbesteht.

12. Verfahren nach Anspruch 11, bei welchem zur Festlegung der Dauer der Alarmverzögerung ein entsprechender Parameter über die Eingabe-Schnittstelle eingegeben wird.

13. Verfahren nach einem oder mehreren der vorhergehenden Ansprüche, bei welchem die Alarmvorrichtung eine Drehzahlüberwachung aufweist, durch welche beim Unterschreiten einer bestimmten Motordrehzahl ein Alarm ausgelöst wird.

14. Verfahren nach Anspruch 13, bei welchem die Drehzahlüberwachung mit einer Hysterese versehen ist, welche den Alarmzustand erst beim Erreichen einer Motordrehzahl zurücksetzt, die größer ist als die Motordrehzahl, bei deren Unterschreiten der Alarm ausgelöst wird.

15. Verfahren nach Anspruch 13 oder 14, bei welchem zur Festlegung mindestens einer Drehzahlgrenze der Drehzahlüberwachung mindestens ein entsprechender Parameter über die Eingabe-Schnittstelle eingegeben wird.

16. Verfahren nach einem oder mehreren der vorhergehenden Ansprüche, bei welchem der Mikroprozessor eine Temperaturüberwachungsroutine aufweist, durch welche beim Überschreiten einer bestimmten Temperatur ein Alarm auslöst wird.

**17.** Verfahren nach Anspruch 16, bei welchem die Temperaturüberwachungsroutine mit einer Hysterese versehen ist, welche den Alarmzustand beim Erreichen einer Temperatur zurücksetzt, die niedriger liegt als die Temperatur, bei welcher der Alarm ausgelöst wird.

**18.** Verfahren nach Anspruch 16 oder 17, bei welchem zur Festlegung mindestens einer Grenztemperatur der Temperaturüberwachungsroutine mindestens ein entsprechender Parameter über die Eingabe-Schnittstelle eingegeben wird.

**19.** Verfahren nach einem oder mehreren der vorhergehenden Ansprüche, bei welchem mindestens eines der Signale der Alarmvorrichtung, welches bei Vorliegen einer Alarmbedingung ausgegeben wird, dazu verwendet wird, einen internen Reset des Mikroprozessors auszulösen.

**20.** Verfahren nach einem oder mehreren der vorhergehenden Ansprüche, bei welchem als Parameter mindestens ein Datenwort über die Eingabe-Schnittstelle eingegeben wird.

**21.** Verfahren nach Anspruch 20, bei welchem das mindestens eine Datenwort eine Drehzahlinformation für die Drehzahlüberwachung enthält.

**22.** Verfahren nach Anspruch 20 oder 21, bei welchem das mindestens eine Datenwort eine Temperaturinformation für die Temperaturüberwachung enthält.

**23.** Verfahren nach einem oder mehreren der Ansprüche 20 bis 22, bei welchem das mindestens eine Datenwort eine Sensorinformation für die Überwachung eines dem Motor zugeordneten Sensors (62) enthält.

**24.** Verfahren nach Anspruch 23, bei welchem der Sensor ein NTC-Widerstand (62) ist.

**25.** Verfahren nach einem oder mehreren der vorhergehenden Ansprüche, bei welchem dem Mikroprozessor eine Routine zugeordnet ist, welche abhängig von mindestens einem eingegebenen Parameter eine Aktivierung oder Deaktivierung der Alarmvorrichtung ermöglicht.

**26.** Verfahren zum Betreiben eines elektronisch kommutierten Motors, welchem ein Mikroprozessor oder Mikrocontroller, im folgenden kurz Mikroprozessor (23) genannt, und ein nichtflüchtiger Parameterspeicher (74), zugeordnet sind, wobei der Mikroprozessor zur Ausführung einer Mehrzahl von Routinen unterschiedlicher Priorität dient, mit folgenden Schritten:

a) Wenn bei der Ausführung einer zur Fehlererkennung dienenden Diagnoseroutine ein Fehler festgestellt wird, wird ein diesem Fehler zugeordnetes Signal (Fig. 12: AS_n_ON; Fig. 13: AS_T_ON; Fig. 14: AS_NTC_ON) gesetzt;
b) durch eine zur Auslösung eines Alarms dienende Alarmüberwachungsroutine (Fig. 5 und 14: S640) wird in zeitlichen Abständen geprüft, ob ein einem Fehler zugeordnetes Signal gesetzt ist;
c) bei gesetztem Signal wird entsprechend diesem Signal und mindestens einem durch eine Eingabe-Schnittstelle (80, 82) zuführbaren Parameter (Objekttabelle 111), welcher in dem nichtflüchtigen Parameterspeicher (74) gespeichert oder von diesem abgeleitet ist, ein Alarmsignal (Fig 14: S224) erzeugt.

**27.** Verfahren nach Anspruch 26, bei welchem die Alarmüberwachungsroutine (S640) ausgeführt wird, wenn im Augenblick keine andere Routine mit höherer Priorität vorliegt (Fig. 5).

**28.** Verfahren nach Anspruch 26 oder 27, bei welchem bei einer Parametrierung des Motors (32) über die Eingabe-Schnittstelle (80, 82) in den nichtflüchtigen Parameterspeicher (74) mindestens ein Parameter geladen wird, welcher den Ablauf der Alarmüberwachungsroutine (S640) beeinflusst.

**29.** Verfahren nach einem oder mehreren der Ansprüche 26 bis 28, bei welchem der mindestens eine im nichtflüchtigen Parameterspeicher (74) gespeicherte Parameter für die Alarmüberwachungsroutine (S640) vor Ausführung der Alarmüberwachungsroutine in einen dem Mikroprozessor (23) zugeordneten und von diesem adressierbaren flüchtigen Speicher (97) übertragen wird.

**30.** Verfahren nach einem oder mehreren der Ansprüche 26 bis 29, mit folgenden Schritten:

Parameter für eine Diagnoseroutine und/oder die Alarmüberwachungsroutine (S640) werden in mindestens einem Register des nichtflüchtigen Parameterspeichers (74) gespeichert;

in Abhängigkeit von einem ihr zugeordneten Parameter wird die betreffende Routine ausgeführt.

31. Verfahren nach Anspruch 3 oder 30, bei welchem die im nichtflüchtigen Parameterspeicher (74) des Motors gespeicherten Parameter vor Ausführung der Routine in einen dem Mikroprozessor zugeordneten und von diesem adressierbaren flüchtigen Speicher (97) übertragen werden, ggf. in modifizierter Form.

32. Verfahren nach Anspruch 31, bei welchem die Parameter beim Einschalten des Motors (32) in den flüchtigen Speicher (97) übertragen werden, ggf. in modifizierter Form.

33. Verfahren nach Anspruch 31 oder 32, bei welchem die Parameter jeweils bei einem Resetvorgang des Mikroprozessors (23) in den flüchtigen Speicher (97) übertragen werden, ggf. in modifizierter Form.

34. Verfahren nach einem oder mehreren der Ansprüche 26 bis 33, bei welchem in dem nichtflüchtigen Parameterspeicher (74) mindestens ein Parameter (AK_LATCH) gespeichert wird, der steuert, ob ein Alarmsignal gespeichert werden soll oder nicht (Fig. 14).

35. Verfahren nach einem oder mehreren der Ansprüche 26 bis 34, bei welchem die Routinen unterschiedlicher Priorität mindestens teilweise als Routinen ausgebildet sind, welche durch ein Anforderungssignal anforderbar sind, wobei jeweils nach Abarbeiten einer angeforderten Routine eine für den Betrieb des Motors erforderliche Folge von Programmschritten abgearbeitet wird, bevor die nächste angeforderte Routine oder die Alarmüberwachungsroutine (S640) beginnt.

36. Verfahren nach Anspruch 35, bei welchem die für den Betrieb des Motors erforderliche Folge von Programmschritten eine Routine (COMM) aufweist, welche die Eingabe-Schnittstelle (80, 82) abfragt, über welche der Inhalt des nichtflüchtigen Parameterspeichers (74) veränderbar ist.

37. Verfahren nach einem oder mehreren der vorhergehenden Ansprüche, bei welchem anstelle eines Alarmsignals ein Tachosignal ausgegeben wird, wenn kein Alarm vorliegt.

38. Verfahren nach einem der vorhergehenden Ansprüche, bei welchem die Art der Alarmausgabe durch einen Parameter gesteuert wird.

39. Verfahren nach einem oder mehreren der vorhergehenden Ansprüche, für einen Motor, dessen Alarmvorrichtung einen TTL-Ausgang aufweist, wobei über einen Parameter ausgewählt wird, ob bei einem Fehler HIGH und ohne Fehler LOW ausgegeben wird, oder umgekehrt.

40. Elektromotor mit einer Alarmvorrichtung, welchem ein Mikrocontroller oder Mikroprozessor, im folgenden Mikroprozessor (23) genannt, zugeordnet ist,

mit mindestens einer in dem Mikroprozessor (23) vorgesehenen Routine der Alarmvorrichtung;

einer Eingabe-Schnittstelle (80, 82) zur Eingabe mindestens eines Parameters (Objekttabelle 111) für die Konfiguration der Alarmvorrichtung des Motors; und einem Parameterspeicher (74; 109) zur Speicherung des mindestens einen Parameters, wobei der Ablauf der mindestens einen in dem Mikroprozessor (23) vorgesehenen Routine durch diesen Parameter oder einen von ihm abgeleiteten Parameter beeinflussbar ist.

41. Elektromotor mit einer Alarmvorrichtung und einem Mikrocontroller oder Mikroprozessor, im folgenden kurz Mikroprozessor (23) genannt, welcher Mikroprozessor (23) zur Ausführung einer Mehrzahl von Routinen unterschiedlicher Priorität ausgebildet ist,

mit einem nichtflüchtigen Parameterspeicher (74: 109) zur Speicherung mindestens eines durch eine Eingabe-Schnittstelle (80, 82) zuführbaren Parameters (Objekttabelle 111) für die Konfiguration der Alarmvorrichtung des Motors;

mindestens einer Diagnoseroutine (Fig. 11: S304; Fig. 12: S630; Fig. 13: S634) zur Erfassung eines im Betrieb des Motors auftretenden Fehlers und zum Setzen eines diesem Fehler zugeordneten Signals (Fig. 12: AS n ON; Fig. 13: AS T ON: Fig. 14: AS NTC ON).

mindestens einer Alarmüberwachungsroubne (Fig. 14: S640) zur Auslösung eines Alarms, welche dazu ausgebildet ist, in zeitlichen Abständen zu prüfen, ob ein einem Fehler zugeordnetes Signal gesetzt ist und bei gesetztern Signal entsprechend diesem Signal und dem mindestens einen Parameter (Objekttabelle 111) ein Alarmsignal (Fig 14:

S224) zu erzeugen, wobei diese Routinen einen Bestandteil des Programms des Mikroprozessors (23) bilden.

**42.** Elektromotor nach Anspruch 41, mit einer Daten-Sammelleitung (82) zur Übertragung mindestens eines Parameters zum nichtflüchtigen Parameterspeicher (74).

**43.** Elektromotor nach Anspruch 41 oder 42, bei welchem der mindestens eine Parameter (Fig. 7A: AC_LATCH) steuert, ob ein aufgetretener Alarm nach Wegfall des Fehlers gespeichert bleibt oder nicht (Fig. 14).

**44.** Elektromotor nach einem oder mehreren der Ansprüche 39 bis 43, bei welchem der mindestens eine Parameter (Fig. 7A: AC_SIG) steuert, welche Art von Signal bei einem Fehler ausgegeben wird (Fig. 14).

**45.** Elektromotor nach einem oder mehreren der Ansprüche 42 bis 44, bei welchem der mindestens eine Parameter (Fig. 7A: t_DEL_STARTUP) steuert, während welcher Zeitspanne nach dem Einschalten des Motors (32) die Erzeugung eines Alarmsignals (Fig. 14: ALARM_OUT) unterdrückt wird.

**46.** Elektromotor nach einem oder mehreren der Ansprüche 42 bis 45, bei welchem der mindestens eine Parameter steuert, während welcher Zeitspanne (Fig. 7: t_DEL_AL) nach Auftreten eines Fehlers die Erzeugung eines Alarmsignals (Fig. 14: ALARM_OUT) unterdrückt wird.

**Claims**

**1.** Method for configuring an alarm device of an electric motor (32) which has an associated microcontroller or microprocessor, referred to in the following as a microprocessor (23), an input interface (80, 82) and a parameter memory (74; 109),
which method comprises the following steps:

at least one parameter (object table 111) for configuring the alarm device of the motor is inputted through the input interface (80, 82);
the at least one parameter is stored in the parameter memory (74; 109);
the sequence of operations of at least one routine of the alarm device provided in the microprocessor (23) is influenced by this stored parameter or a parameter derived from it.

**2.** Method according to claim 1, in which the motor (32) is an electronically commutated motor and its commutation is controlled by the microprocessor (23).

**3.** Method according to claim 1 or 2, in which the parameter memory is embodied as a non-volatile memory (74).

**4.** Method according to one of the preceding claims, in which a plurality of routines is provided for execution in the microprocessor (23), which routines comprise elements for tripping an alarm in predetermined alarm conditions, and a plurality of parameters is inputted through the input interface in order to influence the sequence of operations of a plurality of these routines.

**5.** Method according to one of the preceding claims in which at least one output signal of the alarm device is outputted through the input interface which is embodied as an input/output interface.

**6.** Method according to one of the preceding claims for a motor in which a plurality of alternatives is provided for outputting a signal of the alarm device and in which the desired alternative is established by storing a corresponding parameter in the parameter memory (74; 109) through the input interface.

**7.** Method according to one or more of the preceding claims for a motor which comprises an output device (88) for outputting an alarm signal (ALARM_OUT), wherein a routine executable by the microprocessor is provided for controlling this alarm device, and a parameter for influencing this routine is inputted in order to configure the alarm device according to this parameter.

**8.** Method according to one or more of claims 4 to 7 for a motor with a plurality of output devices for outputting an alarm signal in which at least one parameter is inputted in order to control through which of the output devices the at least one signal of the alarm device is outputted.

9. Method according to one or more of the preceding claims in which the alarm device comprises an acceleration delay through which the tripping of an alarm is suppressed for a predetermined time after the motor is switched on.

10. Method according to claim 9 in which a corresponding parameter for determining the duration of the acceleration delay is inputted through the input interface.

11. Method according to one or more of the preceding claims in which the alarm device comprises an alarm delay through which the tripping of an alarm is suppressed for a predetermined time after the appearance of an alarm condition so that an alarm is only tripped when the alarm condition persists after the expiry of this predetermined time.

12. Method according to claim 11 in which a corresponding parameter for determining the duration of the alarm delay is inputted through the input interface.

13. Method according to one or more of the preceding claims in which the alarm device comprises a rotational speed monitor through which an alarm is tripped when the rotational speed of the motor drops below a certain value.

14. Method according to claim 13 in which the rotational speed monitor is provided with an overlap which only resets the alarm state when the rotational speed of the motor reaches a value which is greater than the rotational speed of the motor below which the alarm is tripped.

15. Method according to claim 13 or 14 in which at least one corresponding parameter for determining at least one rotational speed limit of the rotational speed monitor is inputted through the input interface.

16. Method according to one or more of the preceding claims in which the microprocessor comprises a temperature monitoring routine through which an alarm is tripped when the temperature exceeds a specific value.

17. Method according to claim 16 in which the temperature monitoring routine is provided with an overlap which resets the alarm state on reaching a temperature which is lower than the temperature at which the alarm is tripped.

18. Method according to claim 16 or 17 in which at least one corresponding parameter for determining at least one limit temperature for the temperature monitoring routine is inputted through the input interface.

19. Method according to one or more of the preceding claims in which at least one of the signals of the alarm device which is outputted when an alarm condition is present is used to trip an internal reset of the microprocessor.

20. Method according to one or more of the preceding claims in which at least one data word is inputted as parameter through the input interface.

21. Method according to claim 20 in which the at least one data word contains rotational speed information for the rotational speed monitor.

22. Method according to claim 20 or 21 in which the at least one data word contains temperature information for the temperature monitor.

23. Method according to one or more of claims 20 to 22 in which the at least one data word contains sensor information for monitoring a sensor (62) associated with the motor.

24. Method according to claim 23 in which the sensor is an NTC resistor (62).

25. Method according to one or more of the preceding claims in which the microprocessor has an associated routine which allows activation or deactivation of the alarm device dependent on at least one inputted parameter.

26. Method for operating an electronically commutated motor which has an associated microprocessor or microcontroller, referred to in the following as a microprocessor (23) for short, and a non-volatile parameter memory (74), wherein the microprocessor serves to execute a plurality of routines of different priority, with the following steps:

a) when a fault is detected when executing a diagnostic routine serving for recognition of faults, a signal associated with this fault (fig. 12: AS_n_ON; fig. 13: AS_T_ON; fig. 14: AS_NTC_ON) is set;

b) checks are carried out at intervals of time by an alarm monitoring routine (figs. 5 and 14: S640) serving to trip an alarm to establish whether a signal associated with a fault is set;

c) when a signal is set, an alarm signal (fig. 14: S224) is produced corresponding to this signal and at least one parameter (object table 111) which can be fed through an input interface (80, 82) and is stored in the non-volatile parameter memory (74) or derived from this.

27. Method according to claim 26 in which the alarm monitoring routine (S640) is executed when no other routine with a higher priority is present at that moment (fig. 5).

28. Method according to claim 26 or 27 in which at least one parameter which influences the sequence of operations of the alarm monitoring routine (S640) is loaded into the non-volatile parameter memory (74) through the input interface (80, 82) when the motor (32) is parameterised.

29. Method according to one or more of claims 26 to 28 in which the at least one parameter stored in the non-volatile parameter memory (74) for the alarm monitoring routine (S640) is transferred to a volatile memory (97) associated with the microprocessor (23) and addressable by the latter prior to execution of the alarm monitoring routine.

30. Method according to one or more of claims 26 to 29 with the following steps:

parameters for a diagnostic routine and/or the alarm monitoring routine (S640) are stored in at least one register of the non-volatile parameter memory (74);
the routine concerned is executed depending on a parameter associated with it.

31. Method according to claim 3 or 30 in which the parameters stored in the non-volatile parameter memory (74) of the motor are transferred, if necessary in modified form, to a volatile memory (97) associated with the microprocessor and addressable by the latter prior to execution of the routine.

32. Method according to claim 31 in which the parameters are transferred, if necessary in modified form, to the volatile memory (97) when the motor (32) is switched on.

33. Method according to claim 31 or 32 in which the parameters are transferred, if necessary in modified form, to the volatile memory (97) at the time of any reset operation of the microprocessor (23).

34. Method according to one or more of claims 26 to 33 in which at least one parameter (AK_LATCH) which controls whether an alarm signal is to be stored or not (fig. 14) is stored in the non-volatile parameter memory (74).

35. Method according to one or more of claims 26 to 34 in which the routines with the different priority are embodied at least in part as routines which can be requested by a request signal, and in each case after completion of a requested routine a sequence of programme steps required for operation of the motor is completed before the next requested routine or the alarm monitoring routine (S640) begins.

36. Method according to claim 35 in which the sequence of programme steps required for operation of the motor comprises a routine (COMM) which checks the input interface (80, 82) through which the content of the non-volatile parameter memory (74) can be changed.

37. Method according to one or more of the preceding claims in which a tacho signal is outputted in place of an alarm signal when no alarm is present.

38. Method according to one of the preceding claims in which the type of alarm output is controlled by a parameter.

39. Method according to one or more of the preceding claims for a motor the alarm device of which comprises a TTL output, in which a parameter is used to select whether HIGH is outputted in the presence of a fault and LOW is outputted in the absence of a fault, or vice versa.

40. Electric motor with an alarm device which has an associated microcontroller or microprocessor, referred to in the following as a microprocessor (23), with at least one routine of the alarm device provided in the microprocessor (23); an input interface (80, 82) for inputting at least one parameter (object table 111) for configuring the alarm device of the motor;

and a parameter memory (74; 109) for storing the at least one parameter, wherein the sequence of operations of the at least one routine provided in the microprocessor (23) can be influenced by this parameter or a parameter derived from it.

41. Electric motor with an alarm device and a microcontroller or microprocessor, referred to in the following as a microprocessor (23) for short, which microprocessor (23) is designed to execute a plurality of routines with different priority, with a non-volatile parameter memory (74; 109) for storing at least one parameter (object table 111) which can be fed through an input interface (80, 82) for configuring the alarm device of the motor;
at least one diagnostic routine (fig. 11: S304; fig. 12: S630; fig. 13: S634) for detecting a fault appearing in the operation of the motor and for setting a signal associated with this fault (fig. 12: AS_n_ON; fig. 13: AS_T_ON; fig. 14: AS_NTC_ON),
at least one alarm monitoring routine (fig. 14: S640) for tripping an alarm which is designed to check at intervals of time to see whether a signal associated with a fault is set and when a signal is set to produce an alarm signal (fig. 14: S224) corresponding to this signal and the at least one parameter (object table 111), these routines forming a part of the programme of the microprocessor (23).

42. Electric motor according to claim 41 with a data collecting bus (82) for transferring at least one parameter to the non-volatile parameter memory (74).

43. Electric motor according to claim 41 or 42 in which the at least one parameter (fig. 7A: AC_LATCH) controls whether an alarm which has appeared remains stored or not after elimination of the fault (fig. 14).

44. Electric motor according to one or more of claims 39 to 43 in which the at least one parameter (fig. 7A: AC_SIG) controls which type of signal is outputted in the event of a fault (fig. 14).

45. Electric motor according to one or more of claims 42 to 44 in which the at least one parameter (fig. 7A: t_DEL_STARTUP) controls the period of time for which the production of an alarm signal (fig. 14: ALARM_OUT) is suppressed after the motor (32) is switched on.

46. Electric motor according to one or more of claims 42 to 45 in which the at least one parameter controls the period of time (fig. 7: t_DEL_AL) for which the production of an alarm signal (fig. 14: ALARM_OUT) is suppressed after a fault appears.

**Revendications**

1. Procédé de configuration d'un dispositif d'alarme d'un moteur électrique (32) auquel sont associés un microcontrôleur ou microprocesseur, appelé dans la suite microprocesseur (23), une interface d'entrée (80, 82) et une mémoire de ou à paramètres (74 ; 109),
lequel procédé présente les étapes suivantes :

   au moins un paramètre (table d'objets 111) pour la configuration du dispositif d'alarme du moteur est entré via l'interface d'entrée (80, 82) ;
   ledit au moins un paramètre est mémorisé dans la mémoire de paramètres (74 ; 109) ;
   l'exécution d'au moins une routine du dispositif d'alarme prévue dans le microprocesseur (23) est influencée par ce paramètre mémorisé ou un paramètre dérivé de lui.

2. Procédé selon la revendication 1, dans lequel le moteur (32) est un moteur à commutation électronique et sa commutation est commandée par le microprocesseur (23).

3. Procédé selon la revendication 1 ou 2, dans lequel la mémoire de paramètres est réalisée sous forme de mémoire non volatile (74).

4. Procédé selon l'une des revendications précédentes, dans lequel il est prévu - en vue de leur exécution dans le microprocesseur (23) - une pluralité de routines qui présentent des éléments pour le déclenchement d'une alarme dans des conditions d'alarme prédéfinies,
et une pluralité de paramètres est entrée via l'interface d'entrée pour influencer l'exécution de plusieurs de ces routines.

**5.** Procédé selon l'une des revendications précédentes, dans lequel au moins un signal de sortie du dispositif d'alarme est sorti via l'interface d'entrée, laquelle est réalisée sous forme d'interface d'entrée/sortie.

**6.** Procédé selon l'une des revendications précédentes pour un moteur dans lequel il est prévu plusieurs alternatives pour la sortie d'un signal du dispositif d'alarme et dans lequel l'alternative souhaitée est définie par le fait qu'un paramètre correspondant est mémorisé dans la mémoire de paramètres (74 ; 109) via l'interface d'entrée.

**7.** Procédé selon l'une ou plusieurs des revendications précédentes pour un moteur qui présente un dispositif de sortie (88) pour la sortie d'un signal d'alarme (ALARM_OUT),
une routine exécutable par le microprocesseur étant prévue pour la commande de ce dispositif d'alarme,
et un paramètre permettant d'influencer cette routine est entré pour configurer le dispositif d'alarme en fonction de ce paramètre.

**8.** Procédé selon l'une ou plusieurs des revendications 4 à 7 pour un moteur avec une pluralité de dispositifs de sortie pour la sortie d'un signal d'alarme, dans lequel au moins un paramètre est entré pour commander par lequel des dispositifs de sortie ledit au moins un signal du dispositif d'alarme sera sorti.

**9.** Procédé selon l'une ou plusieurs des revendications précédentes, dans lequel le dispositif d'alarme présente une temporisation au démarrage au moyen de laquelle le déclenchement d'une alarme est empêché jusqu'à un instant prédéfini après la mise sous tension du moteur.

**10.** Procédé selon la revendication 9, dans lequel, pour définir la durée de la temporisation au démarrage, un paramètre correspondant est entré via l'interface d'entrée.

**11.** Procédé selon l'une ou plusieurs des revendications précédentes, dans lequel le dispositif d'alarme présente une temporisation d'alarme au moyen de laquelle, après la survenue d'une condition d'alarme, le déclenchement d'une alarme est empêché pendant une durée prédéfinie afin qu'une alarme ne soit déclenchée que si la condition d'alarme est toujours présente après expiration de cette durée prédéfinie.

**12.** Procédé selon la revendication 11, dans lequel, pour définir la durée de la temporisation d'alarme, un paramètre correspondant est entré via l'interface d'entrée.

**13.** Procédé selon l'une ou plusieurs des revendications précédentes, dans lequel le dispositif d'alarme présente une surveillance de vitesse de rotation au moyen de laquelle une alarme est déclenchée en cas de passage sous une certaine vitesse de rotation de moteur.

**14.** Procédé selon la revendication 13, dans lequel la surveillance de vitesse de rotation est munie d'une hystérésis qui ne réinitialise l'état d'alarme qu'à l'atteinte d'une vitesse de rotation de moteur supérieure à la vitesse de rotation de moteur en dessous de laquelle l'alarme est déclenchée.

**15.** Procédé selon la revendication 13 ou 14, dans lequel, pour définir au moins une limite de vitesse de rotation de la surveillance de vitesse de rotation, un paramètre correspondant est entré via l'interface d'entrée.

**16.** Procédé selon l'une ou plusieurs des revendications précédentes, dans lequel le microprocesseur présente une routine de surveillance de température au moyen de laquelle une alarme est déclenchée en cas de dépassement d'une certaine température.

**17.** Procédé selon la revendication 16, dans lequel la routine de surveillance de température est munie d'une hystérésis qui réinitialise l'état d'alarme à l'atteinte d'une température inférieure à la température à laquelle l'alarme est déclenchée.

**18.** Procédé selon la revendication 16 ou 17, dans lequel, pour définir au moins une limite de température de la routine de surveillance de température, un paramètre correspondant est entré via l'interface d'entrée.

**19.** Procédé selon l'une ou plusieurs des revendications précédentes, dans lequel au moins un des signaux du dispositif d'alarme qui est sorti en cas d'existence d'une condition d'alarme est utilisé pour déclencher une réinitialisation interne du microprocesseur.

**20.** Procédé selon l'une des revendications précédentes, dans lequel au moins un mot de données est entré comme paramètre via l'interface d'entrée.

**21.** Procédé selon la revendication 20, dans lequel ledit au moins un mot de données contient une information de vitesse de rotation pour la surveillance de vitesse de rotation.

**22.** Procédé selon la revendication 20 ou 21, dans lequel ledit au moins un mot de données contient une information de température pour la surveillance de température.

**23.** Procédé selon l'une ou plusieurs des revendications 20 à 22, dans lequel ledit au moins un mot de données contient une information de capteur pour la surveillance d'un capteur (62) associé au moteur.

**24.** Procédé selon la revendication 23, dans lequel le capteur est une résistance CTN (62).

**25.** Procédé selon l'une ou plusieurs des revendications précédentes, dans lequel on associe au microprocesseur une routine qui permet une activation ou une désactivation du dispositif d'alarme en fonction d'au moins un paramètre entré.

**26.** Procédé pour faire fonctionner un moteur à commutation électronique auquel sont associés un microcontrôleur ou microprocesseur, appelé dans la suite microprocesseur (23), et une mémoire de ou à paramètres non volatile (74), le microprocesseur servant à l'exécution d'une pluralité de routines de priorité différente, présentant les étapes suivantes :

   a) si un défaut est constaté lors de l'exécution d'une routine de diagnostic servant à la détection de défauts, un signal associé à ce défaut (fig. 12 : AS_n_ON; fig. 13 : AS_T_ON; fig. 14 : AS_NTC_ON) est mis à 1 ;
   b) une routine de surveillance d'alarme (fig. 5 et 14 : S640) servant au déclenchement d'une alarme contrôle à intervalles réguliers si un signal associé à un défaut est à 1 ;
   c) si un signal est à 1, un signal d'alarme (fig. 14 : S224) est généré en fonction de ce signal et d'au moins un paramètre (table d'objets 111) pouvant être amené via une interface d'entrée (80, 82) qui est mémorisé dans la mémoire de paramètres non volatile (74) ou dérivé de celui-ci.

**27.** Procédé selon la revendication 26, dans lequel la routine de surveillance d'alarme (S640) est exécutée quand aucune autre routine de priorité plus élevée (fig. 5) n'est actuellement présente.

**28.** Procédé selon la revendication 26 ou 27, dans lequel, lors d'un paramétrage du moteur (32), au moins un paramètre est chargé via l'interface d'entrée (80, 82) dans la mémoire de paramètres non volatile (74), lequel paramètre influence l'exécution de la routine de surveillance d'alarme (S640).

**29.** Procédé selon l'une ou plusieurs des revendications 26 à 28, dans lequel ledit au moins un paramètre mémorisé dans la mémoire de paramètres non volatile (74) pour la routine de surveillance d'alarme (S640) est transmis avant exécution de la routine de surveillance d'alarme dans une mémoire volatile (97) associée au microprocesseur (23) et adressable par lui.

**30.** Procédé selon l'une ou plusieurs des revendications 26 à 29, présentant les étapes suivantes :

   des paramètres pour une routine de diagnostic et/ou la routine de surveillance d'alarme (S640) sont mémorisés dans au moins un registre de la mémoire de paramètres non volatile (74) ;
   la routine concernée est exécutée en fonction d'un paramètre qui lui est associé.

**31.** Procédé selon la revendication 3 ou 30, dans lequel les paramètres mémorisés dans la mémoire de paramètres non volatile (74) du moteur sont transmis avant exécution de la routine, le cas échéant sous une forme modifiée, dans une mémoire volatile (97) associée au microprocesseur et adressable par lui.

**32.** Procédé selon la revendication 31, dans lequel les paramètres sont transmis dans la mémoire volatile (97), le cas échéant sous une forme modifiée, à la mise sous tension du moteur (32).

**33.** Procédé selon la revendication 31 ou 32, dans lequel les paramètres sont transmis dans la mémoire volatile (97), le cas échéant sous une forme modifiée, à chaque réinitialisation du microprocesseur (23).

**34.** Procédé selon l'une ou plusieurs des revendications 26 à 33, dans lequel au moins un paramètre (AK_LATCH), qui commande si un signal d'alarme doit être mémorisé ou non (fig. 14), est mémorisé dans la mémoire de paramètres non volatile (74).

**35.** Procédé selon l'une ou plusieurs des revendications 26 à 34, dans lequel les routines de priorité différente sont réalisées au moins partiellement sous forme de routines qui sont appelables par un signal d'appel, une suite de pas de programmation nécessaire pour le fonctionnement du moteur étant exécutée après chaque exécution d'une routine appelée avant que la prochaine routine appelée ou la routine de surveillance d'alarme (S640) ne commence.

**36.** Procédé selon la revendication 35, dans lequel la suite de pas de programmation nécessaire pour le fonctionnement du moteur présente une routine (COMM) qui interroge l'interface d'entrée (80, 82) via laquelle le contenu de la mémoire de paramètres non volatile (74) est modifiable.

**37.** Procédé selon l'une ou plusieurs des revendications précédentes, dans lequel un signal tachymétrique est sorti à la place d'un signal d'alarme quand aucune alarme n'est présente.

**38.** Procédé selon l'une ou plusieurs des revendications précédentes, dans lequel le type de sortie d'alarme est commandé par un paramètre.

**39.** Procédé selon l'une ou plusieurs des revendications précédentes pour un moteur dont le dispositif d'alarme présente une sortie TTL, un paramètre permettant de sélectionner si un niveau HAUT est sorti en cas de défaut et un niveau BAS sans défaut, ou inversement.

**40.** Moteur électrique avec un dispositif d'alarme, auquel sont associés un microcontrôleur ou microprocesseur, appelé dans la suite microprocesseur (23),
avec au moins une routine du dispositif d'alarme prévue dans le microprocesseur (23) ;
une interface d'entrée (80, 82) pour l'entrée d'au moins un paramètre (table d'objets 111) pour la configuration du dispositif d'alarme du moteur ;
et une mémoire de ou à paramètres (74 ; 109) pour la mémorisation dudit au moins un paramètre, l'exécution de ladite au moins une routine prévue dans le microprocesseur (23) étant influençable par ce paramètre ou un paramètre dérivé de lui.

**41.** Moteur électrique avec un dispositif d'alarme et un microcontrôleur ou microprocesseur, appelé dans la suite microprocesseur (23), lequel microprocesseur (23) est conçu pour exécuter une pluralité de routines de priorité différente,
avec une mémoire de ou à paramètres non volatile (74 ; 109) pour la mémorisation d'au moins un paramètre (table d'objets 111) pouvant être amené via une interface d'entrée (80, 82) pour la configuration du dispositif d'alarme du moteur ;
au moins une routine de diagnostic (fig. 11 : S304 ; fig. 12 : S630 ; fig. 13 : S634) pour la saisie d'un défaut survenant pendant le fonctionnement du moteur et à la mise à 1 d'un signal associé à ce défaut (fig. 12 : AS_n_ON ; fig. 13 : AS_T_ON ; fig. 14 : AS_NTC_ON),
au moins une routine de surveillance d'alarme (fig. 14 : S640) pour le déclenchement d'une alarme, laquelle est conçue pour contrôler à intervalles réguliers si un signal associé à un défaut est à 1 et, si un signal est à 1, générer un signal d'alarme (fig. 14 : S224) en fonction de ce signal et dudit au moins un paramètre (table d'objets 111), ces routines faisant partie intégrante du programme du microprocesseur (23).

**42.** Moteur électrique selon la revendication 41 avec une ligne collectrice de données (82) pour la transmission d'au moins un paramètre à la mémoire de paramètres non volatile (74).

**43.** Moteur électrique selon la revendication 41 ou 42, dans lequel ledit au moins un paramètre (fig. 7A : AC_LATCH) commande si une alarme survenue reste mémorisée ou non (fig. 14) après suppression du défaut.

**44.** Moteur électrique selon l'une ou plusieurs des revendications 39 à 43, dans lequel ledit au moins un paramètre (fig. 7A : AC_SIG) commande quel type de signal est sorti lors d'un défaut (fig. 14).

**45.** Moteur électrique selon l'une ou plusieurs des revendications 42 à 44, dans lequel ledit au moins un paramètre (fig. 7A : t_DEL_STARTUP) commande pendant quel intervalle de temps après la mise sous tension du moteur (32) la génération d'un signal d'alarme (fig. 14 : ALARM_OUT) est empêchée.

**46.** Moteur électrique selon l'une ou plusieurs des revendications 42 à 45, dans lequel ledit au moins un paramètre commande pendant quel intervalle de temps (fig. 7A : t_DEL_AL) après la survenue d'un défaut la génération d'un signal d'alarme (fig. 14 : ALARM_OUT) est empêchée.

**Fig. 1**

Fig. 2

Fig. 2A

Fig. 2B

Fig. 2C

$$PWM\_TV = \frac{t_{ON}}{T}$$

Fig.3

Fig. 4

Fig. 5

| Bit7 | Bit6 | Bit5 | Bit4 | Bit3 | Bit2 | Bit1 | Bit0 |
|------|------|------|------|------|------|------|------|
| X | X | X | X | FCT_AL_T | FCT_AL_n | FCT_n | FCT_KL |

605

MSB

LSB

# Fig. 6

| Index | | | |
|-------|----------|-----|----------------|
| 0x08 | unsigned16 | R/W | **AL_CONF** |
| 0x09 | unsigned16 | R/W | t_AL_min |
| 0x0A | unsigned16 | R/W | t_AL_max |
| 0x0B | unsigned8 | R/W | t_AL_REL_min |
| 0x0C | unsigned8 | R/W | t_AL_REL_max |
| 0x0D | unsigned8 | R/W | t_DEL_STARTUP |
| 0x0F | unsigned8 | R/W | t_DEL_AL |
| 0x10 | unsigned8 | R/W | T_AL |
| 0x11 | unsigned8 | R/W | T_AL_HYST |
| 0x12 | unsigned8 | R/W | T_NTC_SI |
| 0x13 | unsigned8 | R/W | T_NTC_SS |

## Fig. 7A

AL_CONF

| Bit | | LOW | HIGH |
|-----|---------------|--------|--------|
| 0 | AK_AL | OFF | ON |
| 1 | AK_LATCH | OFF | ON |
| 2 | AK_DEL_STARTUP | OFF | ON |
| 3 | AK_DEL | OFF | ON |
| 4 | AK_TTL | OFF | F->TTL |
| 5 | AK_SIG | F->LOW | F->HIGH |
| 6 | AK_TACHO | ALARM | TACHO |
| 7 | AK_IIC | OFF | F->IIC |
| 8 | AK_NTC | OFF | ON |
| 9 | AK_n | OFF | ON |
| 10 | AK_T | OFF | ON |
| 11 | AK_n_PERC | ABS | REL |
| 12 | AK_n_min | OFF | ON |
| 13 | AK_n_max | OFF | ON |
| 14-15 | RES | | |

## Fig. 7B

AL_CTRL

121

| Bit | | LOW | HIGH |
|---|---|---|---|
| 0 | AC_LATCH | OFF | ON |
| 1 | AC_DEL_STARTUP | OFF | ON |
| 2 | AC_DEL | OFF | ON |
| 3 | AC_TTL | OFF | F -> TTL |
| 4 | AC_SIG | F -> LOW | F -> HIGH |
| 5 | AC_TACHO | OFF | ON |
| 6 | AC_IIC | OFF | F -> IIC |
| 7 | AC_NTC | OFF | ON |
| 8 | AC_n | OFF | ON |
| 9 | AC_T | OFF | ON |
| 10 | AC_AL | OFF | ON |
| 11-15 | RES | | |

Fig. 8

AL_STATE

123

| Bit | | LOW | HIGH |
|---|---|---|---|
| 0 | AS_LATCH_ON | OFF | ON |
| 1 | AS_TACHO_ON | OFF | ON |
| 2 | AS_NTC_ON | OFF | ON |
| 3 | AS_T_ON | OFF | ON |
| 4 | AS_n_ON | OFF | ON |
| 5 | AS_REQ | OFF | ON |
| 6 | AS_OUT | OFF | ON |
| 7 | RES | | |

Fig. 9

Fig. 10

Fig. 11

Alarm-n-CTRL — S630

t_AL_min - t_H > 0 ? — S430

AS_n_ON := 1 — S432

t_AL_max - t_H > 0 ? — S434

AS_n_ON := 0 — S436

FCT_AL_n := 0 — S438

FCT_MAN — S602

Fig. 12

Fig. 13

Alarm-CTRL — S640

AC_AL = 1? — S199 — N → FCT_MAN — S602

Y

(AS_T_ON = 1) OR
(AS_n_ON = 1) OR
(AS_NTC_ON = 1)? — S200 — N → ALARM_RESET — S202

Y

AS_DEL_STARTUP = 1? — S204 — Y → DEL_START_CHK — S206

N

DS_END — S207

AC_DEL = 1? — S208 — Y → DEL_CHK — S210

N

D_END — S212

AS_REQ := 0
AS_OUT := 1 — S214

AC_LATCH = 1? — S220 — Y → AS_LATCH_ON := 1 — S222

N

A — S223

ALARM_OUT := AC_SIG — S224

B — S225

FCT_MAN — S602

## Fig. 14

S202

ALARM_RESET

S230

AC_LATCH = 1? —— Y

N

S231
C

S232

AC_TACHO = 1? —— Y

N

S234

ALARM_OUT := NOT(AC_SIG)

S235
D

S239

AS_REQ := 0
AS_OUT := 0

S602

FCT_MAN

Fig. 15

DEL_START_CHK — S206

t_DEL_CNT >
t_DEL_STARTUP? — S240

N

Y

AS_DEL_STARTUP := 0 — S242

FCT_MAN — S602

DS_END — S207

## Fig. 16

DEL_CHK — S210

AS_REQ = 1? — S250

N

Y

t_DEL_START := t_DEL_CNT — S252

AS_REQ := 1 — S254

t_DEL_CNT -
t_DEL_START >
t_DEL_AL? — S256

N

Y

FCT_MAN — S602

D_END — S212

## Fig. 17

Fig. 18A

Fig. 18B

Fig. 18C

Fig. 18

S223

A

S270

AC_TTL = 1? —— Y —→ ALARM_OUT := AC_SIG    S272

N

S274

AC_IIC = 1? —— Y —→ SEND_IIC(ALARM, AL_STATE)    S276

N

B    S225

## Fig. 19

S231

C

S290

AC_TTL = 1? —— Y —▶ AC_TACHO = 1? —— N —→ ALARM_OUT := NOT(AC_SIG)    S294

S292

N

Y

S296

AC_IIC = 1? —— Y —▶ SEND_IIC(NO_ALARM)    S298

N

D    S235

## Fig. 20

41

611

Hall-Interrupt

S551

...

S553

HALL=1?

Y — N —

S555

HALL_INT :=
(HIGH -> LOW)

HALL_INT :=
(LOW -> HIGH)

S557

OUT1 := 0
OUT2 := 0

S559

...

S559A

S561

HALL=1?

Y    N

S563

OUT1 := 1

S565

OUT2 := 1

S572

END

Fig. 21